(19) Europäisches Patentamt
European Patent Office
Office européen des brevets

(11) **EP 2 959 992 A1**

(12) **EUROPÄISCHE PATENTANMELDUNG**

(43) Veröffentlichungstag:
**30.12.2015  Patentblatt 2015/53**

(21) Anmeldenummer: **14174601.6**

(22) Anmeldetag: **26.06.2014**

(51) Int Cl.:
*B22F 9/04* (2006.01)   *C23C 4/12* (2006.01)
*C23C 24/04* (2006.01)   *B22F 1/00* (2006.01)
*B22F 3/02* (2006.01)   *B22F 3/22* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Eckart GmbH**
**91235 Hartenstein (DE)**

(72) Erfinder:
• **Ott, Uwe**
**90427 Nürnberg (DE)**

• **Wagner, Harald**
**91235 Hartenstein (DE)**
• **Wolfrum, Christian**
**91056 Erlangen (DE)**
• **Schindler, Kerstin**
**90542 Eckental (DE)**
• **Rupprecht, Markus**
**92265 Edelsfeld (DE)**

(74) Vertreter: **Reis, Andreas**
**Eckart GmbH**
**Intellectual Property**
**Güntersthal 4**
**91235 Hartenstein (DE)**

(54) **Verfahren zur Herstellung eines partikelhaltigen Aerosols**

(57)    Die vorliegende Erfindung betrifft ein Verfahren zur Herstellung eines partikelhaltigen Aerosols. Diese Aerosole sind beispielsweise besonders geeignet, um in der Form eines Aerosolstroms in einem Beschichtungs-verfahren eingesetzt zu werden. Ferner betrifft die vor-liegende Erfindung partikelhaltige Zylinder, welche mit-tels einfacher Verfahren vereinzelt und in Aerosolform überführt werden können.

Abbildung 1

**Beschreibung**

Die vorliegende Erfindung betrifft partikelhaltige Zylinder, welche mittels einfacher Verfahren vereinzelt und in Aerosolform überführt werden können. Diese Aerosole sind besonders geeignet, um in der Form eines Aerosolstroms in einem Beschichtungsverfahren eingesetzt zu werden.

Die Überführung eines pulverförmigen Materials in ein Aerosol, um es beispielsweise im Flammspritzen einzusetzen, ist Gegenstand verschiedener Anmeldungen wie US 4,997,318 B1 und US 6,331,689 B1. Auch die US 4,660,986 A behandelt die Förderung eines Pulvers, was jedoch mit einem sehr großen apparativen Aufwand verbunden ist.

Es hat sich gezeigt, dass mit bekannten Förderverfahren eine gleichmäßige Förderung von Partikeln insbesondere zur Erzielung homogener Beschichtungen schwer bis nicht realisierbar ist.

Eine derartig gleichmäßige Förderung ist jedoch wichtig beispielsweise für Beschichtungsverfahren, da die Qualität einer Beschichtung auch von ihrer Gleichmäßigkeit abhängig ist. Dies gilt insbesondere, wenn eine möglichst dünne und dennoch zuverlässige Beschichtung erhalten werden soll. Bekannte Verfahren nutzen zur Erzeugung der Beschichtungen beispielsweise kinetische Energie, thermische Energie oder Mischungen hiervon, wobei die thermische Energie beispielsweise aus einer konventionellen Verbrennungsflamme oder einer Plasmaflamme stammen kann. Letztere werden weiter unterschieden in thermische und nichtthermische Plasmen, denen gemein ist, dass ein Gas partiell oder vollständig in freie Ladungsträger wie Ionen oder Elektronen aufgetrennt wird.

Beim Kaltgasspritzen erfolgt die Bildung der Beschichtung durch Aufbringen eines Pulvers auf eine Substratoberfläche, wobei die Pulverpartikel stark beschleunigt werden. Hierzu wird ein erhitztes Prozessgas durch Expansion in einer Lavaldüse auf Überschallgeschwindigkeit beschleunigt und anschließend das Pulver injiziert. Infolge der hohen kinetischen Energie bilden die Partikel beim Auftreffen auf der Substratoberfläche eine dichte Schicht.

Beispielsweise offenbart die WO 2010/003396 A1 die Verwendung des Kaltgasspritzens als Beschichtungsverfahren zum Aufbringen von Verschleißschutzbeschichtungen. Weiterhin finden sich Offenbarungen des Kaltgasspritzverfahrens beispielsweise in EP 1 363 811 A1, EP 0 911 425 B1 und US 7,740,905 B2.

Das Flammspritzen gehört zur Gruppe der thermischen Beschichtungsverfahren. Hierbei wird ein pulverförmiges Beschichtungsmaterial in die Flamme eines Brenngas-Sauerstoff-Gemisches eingebracht. Hierbei können beispielsweise mit Acetylen-Sauerstoffflammen Temperaturen von bis zu ungefähr 3200 °C erreicht werden. Details zum Verfahren können Publikationen wie z.B. EP 830 464 B1 und US 5,207,382 A entnommen werden.

Beim thermischen Plasmaspritzen wird ein pulverförmiges Beschichtungsmaterial in ein thermisches Plasma injiziert. Im typischerweise verwendeten thermischen Plasma werden Temperaturen von bis zu ca. 20000 K erreicht, wodurch das injizierte Pulver aufschmilzt und als Beschichtung auf einem Substrat abgeschieden wird.

Das Verfahren des thermischen Plasmaspritzens und spezifische Ausführungsformen sowie Verfahrensparameter sind dem Fachmann bekannt. Exemplarisch wird auf die WO 2004/016821 verwiesen, die den Einsatz des thermischen Plasmaspritzens zum Aufbringen einer amorphen Beschichtung beschreibt. Ferner offenbart beispielsweise EP 0 344 781 den Einsatz des Flammspritzens und des thermischen Plasmaspritzens als Beschichtungsverfahren unter Einsatz eines Wolframcarbidpulvergemisches. Spezifische Geräte zur Verwendung in Plasmaspritzverfahren sind vielfach in der Literatur beschrieben, wie beispielsweise in EP 0 342 428 A2, US 7,678,428 B2, US 7,928,338 B2 und EP 1 287 898 A2.

Beim Hochgeschwindigkeitsflammspritzen wird ein Kraftstoff unter hohem Druck verbrannt, wobei als Kraftstoff sowohl Brenngase, flüssige Brennstoffe und Mischungen hiervon eingesetzt werden können. In die hochbeschleunigte Flamme wird ein pulverförmiges Beschichtungsmaterial injiziert. Dieses Verfahren ist bekannt dafür, dass es sich durch verhältnismäßig dichte Spritzschichten auszeichnen soll. Auch das Hochgeschwindigkeitsflammspritzen ist dem Fachmann gut bekannt und wurde bereits in zahlreichen Veröffentlichungen beschrieben. Beispielsweise offenbart EP 0 825 272 A2 eine Substratbeschichtung mit einer Kupferlegierung unter Einsatz des Hochgeschwindigkeitsflammspritzens. Ferner offenbaren beispielsweise WO 2010/037548 A1 und EP 0 492 384 A1 das Verfahren des Hochgeschwindigkeitsflammspritzens und Geräte zur Verwendung hierin.

Das nichtthermische Plasmaspritzen erfolgt weitgehend analog zum thermischen Plasmaspritzen und Flammspritzen. Ein pulverförmiges Beschichtungsmaterial wird in ein nichtthermisches Plasma injiziert und hiermit auf eine Substratoberfläche aufgetragen. Wie beispielsweise der EP 1 675 971 B1 entnommen werden kann, zeichnet sich dieses Verfahren durch eine besonders niedrige thermische Belastung des beschichteten Substrats aus. Auch dieses Verfahren, besondere Ausführungsformen und entsprechende Verfahrensparameter sind dem Fachmann aus verschiedenen Publikationen bekannt. Beispielsweise beschreibt die EP 2 104 750 A2 die Anwendung dieses Verfahrens und eine Vorrichtung zu dessen Durchführung. Beispielsweise DE 103 20 379 A1 beschreibt die Herstellung eines elektrisch beheizbaren Elementes unter Einsatz dieses Verfahrens. Weitere Offenbarungen hinsichtlich des Verfahrens oder Vorrichtungen für das nichtthermische Plasmaspritzen finden sich beispielsweise in EP 1 675 971 B1, DE 10 2006 061 435 A1, WO 03/064061 A1, WO 2005/031026 A1, DE 198 07 086 A1, DE 101 16 502 A1, WO 01/32949 A1, EP 0 254 424 B1, EP 1 024 222 A2, DE 195 32 412 A1, DE 199 55 880 A1 und DE 198 56 307 C1.

Ein allgemeines Problem von Beschichtungsverfahren unter Einsatz eines partikelförmigen Beschichtungsmaterials ist es jedoch, dass zur Erzeugung einer homogenen, jedoch dünnen Beschichtung, eine sehr hohe Homogenität des eingesetzten Partikelaerosols erforderlich ist. Zwar werden beispielsweise in den anfangs diskutierten Dokumenten spezielle apparative Verfahren zur Erzielung homogener Aerosole beschrieben. Praktisch zeigte sich die technische Umsetzung zumindest in den industriellen Maßstab als schwierig oder war zumindest angesichts des apparativen Aufwands von geringem Interesse.

Eine Aufgabe der vorliegenden Erfindung ist es mithin ein einfaches Verfahren zur gleichmäßigen Partikelförderung sowie die hierzu benötigten Mittel zur Verfügung zu stellen. Hierbei sollen Aerosolströme erhalten werden, welche vorteilhaft in Beschichtungsverfahren eingesetzt werden können. Gleichzeitig sollen möglichst geringe apparative Anforderungen an die Pulverförderung gestellt werden und breite Spektren an Partikeln ohne größere apparative Anpassungen verwendbar sein. Diese Aufgabe wird durch die in den Ansprüchen und Aspekten angegebenen Gegenstände, Verfahren und Verwendungen gelöst.

Die vorliegende Erfindung betrifft ein Verfahren zur Herstellung eines partikelhaltigen Aerosols, wobei der Zylinder ein Volumen von mindestens 5 cm$^3$ aufweist und formstabil ist,

der Anteil an Partikeln im Bereich von 10 Gew.-% bis 99,9 Gew.-% liegt, bezogen auf das Gesamtgewicht des Zylinders, die Biegefestigkeit σ höchstens 3,75 N/mm$^2$ beträgt, wobei σ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, l = Abstand zwischen den beiden Auflagepunkten

die Partikel ausgewählt werden aus der Gruppe bestehend aus Metallpartikeln, Glaspartikeln, Micapartikeln, Keramikpartikeln und Mischungen hiervon

die in dem Zylinder enthaltenen Partikel einen $d_{50}$ von maximal 300 μm aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon. Im Rahmen der Erfindung gilt naturgemäß, dass die Summe aller Gew.-% der Bestandteile eines erfindungsgemäßen Zylinders insgesamt maximal 100 Gew.-% betragen kann. Vorzugsweise werden die anorganischen Bindemittel ausgewählt aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon. Die organischen Bindemittel werden vorzugsweise ausgewählt aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

Unter dem Begriff "Zylinder" im Sinne der vorliegenden Erfindung wird grundsätzlich die geometrische Grundform bekannt als Zylinder verstanden, d.h. ein von zwei parallelen, ebenen, kongruenten Flächen (Grund- und Deckfläche) und einer Mantel- bzw. Zylinderfläche begrenzter Körper, wobei die Mantelfläche von parallelen Geraden gebildet wird. Erfindungsgemäß umfasst der Begriff Zylinder im Sinne der vorliegenden Erfindung auch theoretisch endlose Zylinderformen, welche beispielsweise mittels einer kontinuierlichen Extrusion erhalten werden. Vorzugsweise handelt es sich bei den Zylindern der vorliegenden Erfindung jedoch um einzelne Zylinder, wobei deren Länge bevorzugt weniger als 2 Meter, mehr bevorzugt weniger als 1 Meter, beträgt. Allerdings kann der erfindungsgemäße Zylinder naturgemäß als Realkörper von der idealen Struktur eines geometrisch perfekten Zylinders abweichen. Vorzugsweise kann die reale Struktur bis auf 5 Vol-%, mehr bevorzugt bis auf 3 Vol-% mittels eines geometrisch idealen Zylinders angenähert werden. Bei einer Ausformung ohne definiertes Ende werden zur Bestimmung des durchschnittlichen Volumens mindestens 4, vorzugsweise 4, Stücke des Zylinders nach zufälliger Auswahl abgetrennt und vermessen. Die Länge der Stücke beträgt hierbei mindestens 7 cm, vorzugsweise 7 cm, sofern das arithmetische Mittel von Grundfläche und Deckfläche mindestens 7 cm$^2$ beträgt. Sofern das arithmetische Mittel von Grundfläche und Deckfläche x cm$^2$ beträgt, wobei x < 7 ist, beträgt die Länge mindestens x cm, vorzugsweise x cm. Die Bestimmung des Volumens erfolgt mittels des Fachmanns geläufiger Verfahren wie beispielsweise die Bestimmung des verdrängten Volumens des betreffenden Zylinders in einer Flüssigkeit. Unter dem Begriff "formstabil" wird verstanden, dass der Zylinder bei typischer Beanspruchung wie Lagerung, Transport und dem Einsetzen in entsprechende Vorrichtungen nicht zerfällt, das heißt zerbröckelt oder zerbricht. Vorzugsweise wird unter dem Begriff "formstabil" verstanden, dass die Zylinder eine Biegefestigkeit von mindestens 0,006 N/mm$^2$ aufweisen.

Die Bestimmung der Biegefestigkeit erfolgt mittels einer Dreipunktmessung. Hierbei wird ein Prüfkörper vorzugsweise in Form eines Quaders mit quadratischer Grundfläche (2 cm) Kantenlänge und einer Höhe von mindestens 9 cm auf zwei parallel angeordnete Auflagestäbe mit einem Abstand von 8 cm mittig angeordnet. Sofern der zu prüfende Zylinder keine Quaderform aufweist, kann er beispielsweise durch Schleifen, Sägen, Schneiden, etc. in die Quaderform gebracht werden. In der Mitte des Prüfkörpers (jeweils 4 cm Abstand von den Auflagestäben) wird von oben mittels eines Belastungsstabes Druck ausgeübt und die ausgeübte Kraft aufgezeichnet. Auflagestäbe und Belastungsstab sind zylindrische Körper mit kreisrunder Grundfläche und einem Durchmesser von 5 mm. Die Auflagestäbe und der Belastungsstab sind frei gelagert, um Reibungseinflüsse zu minimieren. Als Messgerät dient vorzugsweise eine Instron 5565 Universalprüfmaschine bei 22 °C und 45 % relativer Luftfeuchtigkeit. Die Messung erfolgt mittels einer Kompressionsrate von 2 mm pro Minute unter Verwendung einer 1000 N Kraftmessdose. Die Datenaufnahme und Auswertung kann hierbei mittels dem Instron Programm Bluehill Vers. 3.42 unter Aufzeichnung des Verfahrweges und der dabei gemessenen Kraft bis zum Zerbrechen der Probe erfolgen. Die Biegefestigkeit ergibt sich gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten, aus dem Maximum der Kurven. Hierbei wird das arithmetisches Mittel von mindestens 5 Proben, vorzugsweise 5 Proben, verwendet. Einzelne fehlerhafte Proben werden naturgemäß verworfen und nicht bei der Berechnung verwendet. Beispielsweise kann eine niedrigere Biegefestigkeit durch eine in der Säule eingeschlossene Luftblase verursacht werden. Vorzugsweise wird die Biegefestigkeit einzelner Proben außer Acht gelassen, sofern deren Biegefestigkeit um mindestens 10 % vom arithmetischen Mittel der verbleibenden Proben abweicht, wobei die am stärksten abweichenden Proben verworfen werden. Hierbei können bis zu 10 % der Proben, wobei die Anzahl dieser 10 % auf eine ganze Zahl aufgerundet wird, verworfen werden. Anstelle dieser verworfenen Proben werden einmalig Ersatzmessungen durchgeführt.

Als Glaspartikel werden im Sinne der Erfindung insbesondere Partikel mit Siliciumdioxid als Hauptbestandteil verstanden. Ein Beispiel eines besonders vorteilhaft einzusetzenden Glases ist Borosilikatglas.

Unter dem Begriff Micapartikel werden vorzugsweise Partikel aus Glimmer, wie beispielsweise Fluorophlogopit, verstanden. Zwar weisen natürliche Glimmer Kostenvorteile auf, jedoch sind für Verwendungszwecke bei denen eine genaue Zusammensetzung eingehalten werden muss, beispielsweise im Lebensmittelsektor oder der Halbleiterindustrie, synthetische Glimmer zu bevorzugen.

Ein Beispiel von Keramikpartikeln sind Partikel aus Aluminiumoxidkeramiken.

Bevorzugte Weiterbildungen des erfindungsgemäßen Verfahrens finden sich beispielsweise in den Aspekten 2 bis 28 und den Ansprüchen 2 bis 12.

Ferner betrifft die vorliegende Erfindung einen partikelhaltigen Zylinder, wobei der Zylinder ein Volumen von mindestens 5 cm$^3$ aufweist und formstabil ist,
der Anteil an Partikeln im Bereich von 10 Gew.-% bis 99,9 Gew.-% liegt, bezogen auf das Gesamtgewicht des Zylinders,
die Biegefestigkeit σ höchstens 3,75 N/mm$^2$ beträgt, wobei σ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten,
die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 μm aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon. Vorzugsweise werden die anorganischen Bindemittel ausgewählt aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon. Die organischen Bindemittel werden vorzugsweise ausgewählt aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

Bevorzugte Weiterbildungen der erfindungsgemäßen Zylinder finden sich beispielsweise in den Aspekten 30 bis 50 und Anspruch 14.

Weiterhin betrifft die vorliegende Erfindung die Verwendung eines erfindungsgemäßen Zylinders zur Erzeugung eines partikelhaltigen Aerosols.

Bevorzugte Weiterbildungen der erfindungsgemäßen Verwendungen finden sich beispielsweise in Aspekt 52.

Ferner betrifft die vorliegende Erfindung einen Gegenstand, der mittels eines erfindungsgemäß erzeugten Aerosols beschichtet wurde.

Die vorliegende Erfindung betrifft ein Verfahren zur Herstellung eines partikelhaltigen Aerosols, wobei ein partikelhaltiger Zylinder zerkleinert wird. Die Zerkleinerung des Zylinders kann mittels des Fachmanns geläufiger Verfahren erfolgen. Beispielsweise haben sich Vorrichtungen unter Einsatz einer Bürste oder eines Schleifbandes bewährt. Entsprechende Vorrichtungen unter Einsatz einer Bürste werden beispielsweise auch vielfach zur Überführung eines losen Pulvers in Aerosolform eingesetzt. Weitere Fördervorrichtungen verwenden rotierende Fräsköpfe wie Schruppfräser oder Stirnfräser. Ferner können Schleifscheiben oder Schleifwalzen mit Schleifkörnern wie beispielsweise Siliciumcarbid, Wolframcarbid oder Diamant verwendet werden. Ein besonderer Vorteil der vorliegenden Erfindung ist jedoch, dass besonders leicht verarbeitbare Säulen erhalten werden können, die mittels simpler Förderverfahren wie der Bürstenförderung ohne starken Verschleiß an der Fördereinrichtung eingesetzt werden können.

Es hat sich gezeigt, dass die Partikel mittels des erfindungsgemäßen Verfahrens wieder hervorragend vereinzelt werden können. Beispielsweise zeigten Messungen der Partikelgrößen nur eine geringfügig höhere mittlere Partikelgröße der Aerosolpartikel nach Vereinzelung der Säule verglichen mit den ursprünglichen Partikeln. Bei weiteren Ausführungsformen beträgt die mittlere Partikelgröße ($D_{50}$) des Aerosols vorzugsweise höchstens das 5-fache, mehr bevorzugt höchstens das 3-fache, noch mehr bevorzugt höchstens das 2-fache der Partikel. Die Messung der mittleren Partikelgröße der in der Säule enthaltenen Partikel sowie der Aerosolpartikel erfolgt hierbei vorzugsweise mittels Lasergranulometrie unter Einsatz eines Partikelgrößenanalysator HELOS der Fa. Sympatec GmbH, Clausthal-Zellerfeld, Deutschland. Die Dispergierung eines trockenen Pulvers kann hierbei mit einer Dispergiereinheit vom Typ Rodos T4.1 bei einem Primärdruck von beispielsweise 4 bar erfolgen. Die Auswertung der Streulichtsignale erfolgt dabei nach der Fraunhofer Methode.

Das erfindungsgemäße Aerosol wird vorzugsweise direkt in die gewünschte Applikation als Aerosolstrom überführt. Mittels des erfindungsgemäßen Verfahrens kann überraschenderweise ein äußerst gleichmäßiger Aerosolstrom erzeugt werden, der insbesondere vorteilhaft in Beschichtungsverfahren wie dem nichtthermischen Plasmaspritzen eingesetzt werden kann. Es wird vermutet, dass Beschichtungsverfahren welche typischerweise nur eine sehr geringe Aktivierung der eingebrachten Partikel verursachen, besonders stark von dem besonders homogenen Aerosolstrom profitieren, wodurch sehr homogene und hochqualitative Beschichtungen erhalten werden. Das erfindungsgemäße hergestellte Aerosol kann jedoch zur Beschichtung verschiedenster Stoffe unter Einsatz verschiedenster Beschichtungsverfahren eingesetzt werden. In diesem Zusammenhang haben sich Beschichtungsverfahren als besonders vorteilhaft erwiesen, welche ausgewählt werden aus der Gruppe bestehend aus Kaltgasspritzen, Flammspritzen, Hochgeschwindigkeitsflammspritzen, thermischem Plasmaspritzen und nichtthermischem Plasmaspritzen. Insbesondere hat sich das erfindungsgemäße Verfahren als vorteilhaft in Kombination mit dem nichtthermischen Plasmaspritzen erwiesen.

Das Kaltgasspritzen zeichnet sich dadurch aus, dass ein aufzubringendes partikuläres Material nicht im Gasstrahl aufgeschmolzen wird, sondern dass die Partikel stark beschleunigt werden und infolge ihrer kinetischen Energie eine Beschichtung auf der Oberfläche des Substrats bilden. Hierbei können verschiedene dem Fachmann bekannte Gase als Trägergas eingesetzt werden wie zum Beispiel Stickstoff, Helium, Argon, Luft, Krypton, Neon, Xenon, Kohlenstoffdioxid, Sauerstoff oder Mischungen davon. Bei bestimmten Varianten ist es insbesondere bevorzugt, dass als Gas Luft, Helium oder Gemische davon eingesetzt werden.

Durch eine kontrollierte Expansion der vorgenannten Gase in einer entsprechenden Düse werden Gasgeschwindigkeiten von bis zu 3000 m/s erreicht. Die Partikel können hierbei auf bis zu 2000 m/s beschleunigt werden. Bei bestimmten Varianten des Kaltgasspritzens ist es jedoch bevorzugt, dass die Partikel beispielsweise Geschwindigkeiten zwischen 300 m/s und 1600 m/s, vorzugsweise zwischen 1000 m/s und 1600 m/s, mehr bevorzugt zwischen 1250 m/s und 1600 m/s erreichen.

Nachteilig ist beispielsweise die große Lärmentwicklung, die durch die hohen Geschwindigkeiten der verwendeten Gasströme hervorgerufen wird.

Beim Flammspritzen wird beispielsweise ein partikuläres Material mittels einer Flamme in den flüssigen oder plastischen Zustand überführt und dann als Beschichtung auf ein Substrat aufgetragen. Hierbei wird z.B. eine Mischung aus Sauerstoff und einem brennbaren Gas wie Acetylen oder Wasserstoff verbrannt. In bestimmten Varianten des Flammspritzens wird ein Teil des Sauerstoff genutzt, um das pulverförmige Beschichtungsmaterial in die Verbrennungsflamme zu befördern. Die Partikel erreichen bei gebräuchlichen Varianten dieses Verfahrens Geschwindigkeiten zwischen 24 bis 31 m/s.

Ähnlich wie bei Flammspritzen wird auch beim Hochgeschwindigkeitsflammspritzen beispielsweise ein partikuläres Material mittels einer Flamme in einen flüssigen oder plastischen Zustand überführt. Die Partikel werden jedoch im Vergleich zum vorgenannten Verfahren bedeutend höher beschleunigt. Bei spezifischen Beispielen des vorgenannten Verfahrens wird beispielsweise eine Geschwindigkeit des Gasstroms von 1220 bis 1525 m/s mit einer Geschwindigkeit der Partikel von ca. 550 bis 795 m/s genannt. Bei weiteren Varianten dieses Verfahrens werden jedoch auch Gasgeschwindigkeiten von über 2000 m/s erreicht. Im Allgemeinen ist es bei gebräuchlichen Varianten des voranstehenden Verfahrens bevorzugt, dass die Geschwindigkeit der Flamme zwischen 1000 und 2500 m/s liegt. Ferner ist es bei gebräuchlichen Varianten bevorzugt, dass die Flammentemperatur zwischen 2200 °C und 3000 °C liegt. Die Temperatur der Flamme ist somit vergleichbar zur Temperatur beim Flammspritzen. Dies wird erreicht durch Verbrennung der Gase unter einem Druck von ca. 515 bis 621 kPa gefolgt von der Expansion der Verbrennungsgase in einer Düse. Im Allgemeinen wird die Auffassung vertreten, dass hierbei erzeugte Beschichtungen eine höhere Dichte aufweisen, verglichen mit beispielsweise Beschichtungen erhalten durch das Flammspritzverfahren.

Das Detonations/Explosivflammspritzen kann als Unterart des Hochgeschwindigkeitsflammspritzens betrachtet werden. Hierbei wird ein partikuläres Material durch wiederholte Detonationen eines Gasgemisches wie Acetylen/Sauerstoff stark beschleunigt, wobei beispielsweise Partikelgeschwindigkeiten von ca. 730 m/s erreicht werden. Die Detonationsfrequenz des Verfahrens liegt hierbei beispielsweise zwischen ca. 4 bis 10 Hz. Bei Varianten wie dem sogenannten Hochfrequenz-Gasdetonationsspritzen werden jedoch auch Detonationsfrequenzen um ca. 100 Hz gewählt.

Die erhaltenen Schichten sollen gewöhnlicherweise eine besonders hohe Härte, Stärke, Dichte und gute Bindung an die Substratoberfläche aufweisen. Nachteilig sind bei den vorgenannten Verfahren der erhöhte Sicherheitsaufwand, sowie beispielsweise die große Lärmbelastung aufgrund der hohen Gasgeschwindigkeiten.

Beim thermischen Plasmaspritzen wird beispielsweise ein Primärgas wie Argon mit einer Geschwindigkeit von 40 l/min und ein Sekundärgas wie Wasserstoff mit einer Geschwindigkeit von 2,5 l/min durch einen Gleichstromlichtbogenofen geleitet, wobei ein thermisches Plasma erzeugt wird. Anschließend erfolgt beispielsweise die Zuführung von 40 g/min des pulverförmigen Beschichtungsmaterials unter Hilfe eines Trägergasstromes, der mit einer Geschwindigkeit von 4 l/min in die Plasmaflamme geleitet wird. Bei gebräuchlichen Varianten des thermischen Plasmaspritzens beträgt die Förderrate des pulverförmigen Beschichtungsmaterials zwischen 5 g/min und 60 g/min, mehr bevorzugt zwischen 10 g/min und 40 g/min.

Bei bestimmten Varianten des Verfahrens ist es bevorzugt Argon, Helium oder Mischungen davon als ionisierbares Gas einzusetzen. Der gesamte Gasstrom beträgt bei bestimmten Varianten ferner bevorzugt 30 bis 150 SLPM (standard liters per minute). Die zur Ionisation des Gasstromes eingesetzte elektrische Leistung ohne die infolge einer Kühlung abgeführte Wärmeenergie kann beispielsweise zwischen 5 und 100 kW, vorzugsweise zwischen 40 und 80 kW, gewählt werden. Hierbei können Plasmatemperaturen zwischen 4000 K und einigen 10000 K erreicht werden.

Beim nichtthermischen Plasmaspritzen wird ein nichtthermisches Plasma zur Aktivierung des pulverförmigen Beschichtungsmaterials eingesetzt. Das hierbei verwendete Plasma wird beispielsweise mit einer Barriereentladung oder Coronaentladung mit einer Frequenz von 50 Hz bis 1 MHz erzeugt. In bestimmten Varianten des nichtthermischen Plasmaspritzens ist es bevorzugt, dass bei einer Frequenz von 10 kHz bis 100 kHz gearbeitet wird. Die Temperatur des Plasmas beträgt hierbei bevorzugt weniger als 3000 K, vorzugsweise weniger als 2500 K und noch mehr bevorzugt weniger als 2000 K. Dies minimiert den technischen Aufwand und hält den Energieeintrag in das aufzubringende Beschichtungsmaterial möglichst gering, was wiederum eine schonende Beschichtung des Substrats erlaubt. Die Größenordnung der Temperatur der Plasmaflamme ist somit bevorzugt vergleichbar mit der beim Flammspritzen oder beim Hochgeschwindigkeitsflammspritzen. Durch gezielte Wahl der Parameter lassen sich auch nichtthermische Plasmen erzeugen, deren Kerntemperatur unter 1173 K oder sogar unter 773 K im Kernbereich beträgt. Die Messung der Temperatur im Kernbereich erfolgt hierbei beispielsweise mit einem Thermoelement Typ NiCr/Ni und einem Spitzendurchmesser von 3 mm in 10 mm Abstand vom Düsenaustritt im Kern des austretenden Plasmastrahls bei Umgebungsdruck. Derartige nichtthermische Plasmen sind insbesondere für Beschichtungen von sehr temperaturempfindlichen Substraten geeignet.

Diese Verfahren erlauben ferner die Erzeugung von Beschichtungen mit scharfen Begrenzungen ohne die Notwendigkeit gezielt Bereiche abzudecken. In diesem Kontext hat es sich als vorteilhaft erwiesen insbesondere die Austrittöffnung der Plasmaflamme derart zu gestalten, dass die Bahnbreiten der erzeugten Beschichtungen zwischen 0,2 mm und 10 mm liegen. Dies ermöglicht eine sehr genaue, flexible, energieeffiziente Beschichtung unter bestmöglicher Ausnutzung des eingesetzten Beschichtungsmaterials. Als Abstand der Spritzlanze zum Substrat wird beispielsweise eine Distanz von 1 mm gewählt. Dies ermöglicht eine größtmögliche Flexibilität der Beschichtungen und gewährleistet gleichzeitig qualitativ hochwertige Beschichtungen. Zweckdienlicherweise liegt der Abstand zwischen Spritzlanze und Substrat zwischen 1 mm und 35 mm.

Als ionisierbares Gas können im nichtthermischen Plasmaverfahren verschiedene, dem Fachmann bekannte Gase und deren Mischungen eingesetzt werden. Beispiele hierfür sind Helium, Argon, Xenon, Stickstoff, Sauerstoff, Wasserstoff oder Luft, vorzugsweiseweise Argon oder Luft. Ein besonders bevorzugtes ionisierbares Gas ist Luft.

Beispielsweise zur Verminderung der Lärmbelastung kann es auch hier bevorzugt sein, dass die Geschwindigkeit des Plasmastromes unter 200 m/s liegt. Als Strömungsgeschwindigkeit kann beispielsweise ein Wert zwischen 0,01 m/s und 100 m/s, vorzugsweise zwischen 0,2 m/s und 10 m/s gewählt werden. Insbesondere ist es bei bestimmten Ausführungsformen beispielsweise bevorzugt, dass der Volumenstrom des Trägergases zwischen 10 und 25 l/min, mehr bevorzugt zwischen 15 und 19 l/min liegt.

Die erfindungsgemäßen Zylinder ermöglichen eine besonders gleichmäßige Förderung der Partikel und damit die Erzeugung eines besonders homogenen Aerosols. Bei weiteren Ausführungsformen wird bei dem erfindungsgemäßen Verfahren ein Aerosolstrom erzeugt, dessen Schwankung unter 20 %, vorzugsweise unter 10 %, mehr bevorzugt unter 5 %, liegt. Eine derartig gleichmäßige Förderung kann beispielsweise über einen Zeitraum von mindestens 10 min, vorzugsweise mindestens 20 min, mehr bevorzugt mindestens 40 min aufrecht erhalten werden.

Es hat sich gezeigt, dass die Höhe der erfindungsgemäßen Zylinder bei weiteren Ausführungsformen vorteilhafterweise das mindestens 2-fache, vorzugsweise das mindestens 3-fache, mehr bevorzugt das mindestens 4-fache, des arithmetischen Mittels der längsten Achsen entlang der Grundfläche und der Deckfläche beträgt. Unter der "Höhe" des Zylinders wird der Abstand zwischen Grundfläche und Deckfläche bezeichnet. Beispielsweise beträgt die Höhe eines erfindungsgemäßen Zylinders mit kreisrunder Grundfläche und Deckfläche mit einem Durchmesser von jeweils 5 cm vorteilhafterweise mindestens 10 cm, vorzugsweise mindestens 15 cm, mehr bevorzugt mindestens 20 cm.

Bei weiteren Ausführungsformen ist es bevorzugt, dass die Grundfläche und Deckfläche der partikelhaltigen Zylinder im Wesentlichen elliptisch oder kreisförmig, vorzugsweise kreisförmig, sind. Insbesondere ist es hierbei bevorzugt, dass der Flächeninhalt der Grundfläche und Deckfläche bis zu einer Abweichung von höchstens 10 %, mehr bevorzugt von höchstens 7 %, noch mehr bevorzugt von höchstens 4 %, von dem Flächeninhalt einer idealen geometrischen Ellipsoidfläche bzw. Kreisfläche abweicht.

Ferner ist es bei weiteren Ausführungsformen bevorzugt, dass die Längsachse im Wesentlichen senkrecht zur Grundfläche und Deckfläche steht. Vorzugsweise beträgt die Abweichung weniger als 3°, mehr bevorzugt weniger als 2°.

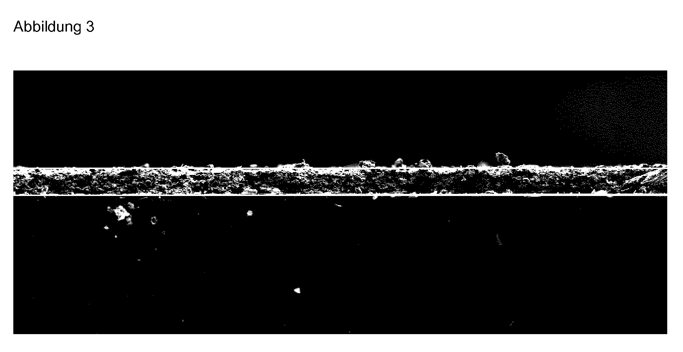

Mittels des erfindungsgemäßen Verfahrens können insbesondere besonders homogene Beschichtungen auch unter sehr milden Bedingungen hergestellt werden. Beispielsweise können unter bereits sehr milden Beschichtungsbedingungen unter Einsatz des nichtthermischen Plasmaspritzens Beschichtungen erhalten werden, welche sich durch eine äußerst homogene Dicke auch bei sehr dünnen Schichtdicken auszeichnen, siehe beispielsweise Abbildung 3. So betragen die Unterschiede zwischen Minima und Maxima vorzugsweise höchstens 5 $\mu$m, mehr bevorzugt höchstens 3 $\mu$m. Bei weiteren Ausführungsformen betragen die Unterschiede zwischen Minima und Maxima vorzugsweise höchstens 20 %, mehr bevorzugt höchstens 14 %, noch mehr bevorzugt höchstens 9 %, bezogen auf die Gesamtdicke der Beschichtung.

Ferner betrifft die vorliegende Erfindung partikelhaltige Zylinder, wobei der Zylinder ein Volumen von mindestens 5 cm$^3$ aufweist und formstabil ist,
der Anteil an Partikeln im Bereich von 10 Gew.-% bis 99,9 Gew.-% liegt, bezogen auf das Gesamtgewicht des Zylinders, die Biegefestigkeit $\sigma$ höchstens 3,75 N/mm$^2$ beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten,
die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 $\mu$m aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon. Vorzugsweise werden die anorganischen Bindemittel ausgewählt werden aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon. Die organischen Bindemittel werden vorzugsweise ausgewählt werden aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon. Die Bestimmung der Partikelmenge und Bindemittelmenge erfolgt mittels dem Fachmann geläufiger Verfahren wie AAS, EDX und RFA. Das Gesamtgewicht des Zylinders wird im trockenen Zustand bestimmt. Vorzugsweise nach mindestens 24 h, mehr bevorzugt 24 h, Lagerung unter STPD-Bedingungen (0 °C, 101 kPa und Wasserdampfpartialdruck = 0 kPa). Soweit nicht anders angegeben, werden auch die sonstigen Gewichtsangaben dieser Erfindung unter diesen Bedingungen vermessen.

Es zeigte sich, dass bei Zylindern mit sehr geringer Formstabilität bzw. mit einer sehr geringen Biegefestigkeit die Lagerung, der Transport und die Handhabung der Zylinder drastisch erschwert wurde. Bei weiteren Ausführungsformen weisen die Zylinder vorzugsweise eine Biegefestigkeit von mindestens 0,0075 N/mm$^2$, mehr bevorzugt mindestens 0,0105 N/mm$^2$, noch mehr bevorzugt mindestens 0,012 N/mm$^2$, noch mehr bevorzugt mindestens 0,015 N/mm$^2$ auf.

Ferner zeigte sich, dass durch die Verwendung von Zylinder mit niedrigerer Biegefestigkeit die Förderbarkeit weiter vereinfacht werden konnte. Bei weiteren Ausführungsformen beträgt die Biegefestigkeit daher vorzugsweise höchstens 2,1 N/mm$^2$, mehr bevorzugt höchstens 1,2 N/mm$^2$, noch mehr bevorzugt höchstens 0,675 N/mm$^2$.

Insbesondere ist es bei weiteren Ausführungsformen bevorzugt, dass die Biegefestigkeit im Bereich von 0,0075 bis 3,75 N/mm$^2$, mehr bevorzugt im Bereich von 0,0105 bis 2,1 N/mm$^2$, noch mehr bevorzugt im Bereich von 0,012 bis 1,2 N/mm$^2$ und noch mehr bevorzugt im Bereich von 0,015 bis 0,675 N/mm$^2$ liegt.

Hierbei kann die Biegefestigkeit vom Fachmann zum Beispiel über die Wahl des Bindemittels, dessen Menge, die Menge gegebenenfalls enthaltener Füllstoffe, etc. gezielt eingestellt werden. Eine Erhöhung der Biegefestigkeit kann beispielsweise mittels des Einsatzes eines Bindemittels mit hoher Festigkeit, der Erhöhung des Bindemittelanteils, dem Druck beim Komprimieren entsprechender Zylinder, etc. erreicht werden. Eine Erniedrigung kann beispielsweise durch Wahl eines Bindemittels mit niedriger Bindewirkung, der Erniedrigung des Bindemittelanteils, der Erhöhung des Lösemittelanteils, dem Zusatz eines Füllstoffs, etc. erreicht werden. Ferner wurde beobachtet dass zur Erzielung einer identischen Biegefestigkeit typischerweise umso mehr Bindemittel eingesetzt werden muss, je mehr die Partikel von der sphärischen Idealform abweichen und je niedriger die Dichte des Materials der Partikel ist. Ferner hat es sich zur Erzeugung homogene Zylinder als vorteilhaft erwiesen, wenn beispielsweise bei Herstellverfahren wie dem Schlickerguss die Lösungsmittelmenge möglichst gering gehalten wird. Eine entsprechende Suspension sollte fließfähig sein, jedoch möglichst wenig Lösungsmittel enthalten. Ferner können verschiedene Additive eingesetzt werden, um die erfindungsgemäßen Zylinder herzustellen. Beispielsweise können Rheologie modifizierende Additive eingesetzt werden, welche den entsprechenden Suspensionen ein thixotropes Verhalten verleihen. Ferner können Benetzungshilfsmittel eingesetzt werden, um beispielsweise eine Einarbeitung der Partikel und/oder des Bindemittels in das gewünschte Lösungsmittel zu erleichtern. Beispiele hierfür sind Tenside oder organische Lösungsmittel.

Die Partikel können vor der Herstellung der Säule auch mit Bindemittel beschichtet werden. Dies hat den Vorteil, dass eine besonders homogene Verteilung des Bindemittels auch bei geringen Bindemittelmengen ohne starke Durchmischungsschritte oder Lösungsmittel erreicht werden kann. Eine derartige Beschichtung beispielsweise bestehend aus einem Monomer wird hierbei gegebenenfalls mit weiterem Bindemittel polymerisiert, um den Zusammenhalt der Säule zu bewirken. Es kann jedoch beispielsweise auch das beschichtete Partikelmaterial ohne weiteres Bindemittel in eine Form überführt und thermisch ausgehärtet werden. Gemäß der vorliegenden Erfindung werden Beschichtungen der Partikel, welche eine dem Bindemittel zumindest vergleichbare Zusammensetzung aufweisen, wie beispielsweise eine Polyacrylatbeschichtung bei einem Polyacrylatbindemittel oder eine siliciumoxidhaltige Beschichtung bei Siliciumoxidbindemittel zur Bindemittelmenge gezählt. Vorzugsweise werden jedoch nur Beschichtungen der Partikel zur Bindemittelmenge gezählt, welche auch eine kovalente Bindung zum Bindemittel ausgebildet haben.

Als Rheologie modifizierende Additive können beispielsweise polymere Materialien wie Polyacrylamide, Polyacrylsäuren, Carboxymethylcellulosen, Hydroxypropylmethylcellulosen, Methylcellulosen, Alginate, Polyethylenglykole, Polyvinylalkohole, Polyvinylpyrrolidone, Polyurethane und Polysaccharide und anorganische Additive wie Siliciumdioxid und Organoclays eingesetzt werden. So sind von der Firma BYK-Chemie beispielsweise BYK-410, BYK-411, BYK-415, BYK-420, BYK-425, BYK-428, BYK-430 und BYK-431 als polymere Rheologie modifizierende Additive erhältlich. Ein Beispiel der Organoclays sind Bentonite. Als Rheologie modifizierendes Additiv aus der Gruppe der Siliciumdioxide kann beispielsweise pyrogene Kieselsäure eingesetzt werden.

Die in den erfindungsgemäßen Zylindern eingesetzten Partikel weisen vorzugsweise einen $d_{50}$ in einem Bereich von 1 $\mu$m bis 300 $\mu$m, vorzugsweise in einem Bereich von 1,5 $\mu$m bis 230 $\mu$m, mehr bevorzugt in einem Bereich von 2 $\mu$m bis 180 $\mu$m, noch mehr bevorzugt in einem Bereich von 2,5 $\mu$m bis 150 $\mu$m, auf. Diese zeigten unter einem breiten Spektrum an Förderbedingungen und Fördermengen eine gute und homogene Aerosolbildung und gute Ergebnisse bei den geläufigen Beschichtungsverfahren.

Zur Erzielung möglichst großer Partikelgehalte in den partikelhaltigen Zylindern hat es sich als vorteilhaft erwiesen nichtplättchenförmige Partikel einzusetzen. Überraschenderweise hat sich gezeigt, dass hiermit sehr einfach hohe Pigmentierungshöhen erreicht werden können, ohne dass beispielsweise Additive bei der Verarbeitung eingesetzt werden müssen. Hierbei liegt der Gehalt an Partikeln vorzugsweise in einem Bereich von 50 Gew.-% bis 99,9 Gew.-%, mehr bevorzugt in einem Bereich von 60 Gew.-% bis 98 Gew.-%, noch mehr bevorzugt in einem Bereich von 70 Gew.-% bis 97 Gew.-%, jeweils bezogen auf das Gesamtgewicht des Zylinders.

Sofern der erfindungsgemäße Aerosolstrom in einer Applikation verwendet werden soll, bei der beispielsweise eine geringe Energiemenge eingebracht werden soll, wie dem nichtthermischen Plasmaspritzen, erwies es sich als schwierig mit dem nicht-plättchenförmigen Beschichtungsmaterial unter besonders milden Beschichtungsbedingungen eine homogene Beschichtung zu erzeugen. Bei weiteren Ausführungsformen ist es bevorzugt, dass die Partikel der erfindungsgemäßen Zylinder plättchenförmige Partikel sind, wobei der Anteil an plättchenförmigen Partikeln in dem partikelhaltigen Zylinder in einem Bereich von 30 Gew.-% bis 75 Gew.-%, vorzugsweise in einem Bereich von 40 Gew.-% bis 70 Gew.-%, mehr bevorzugt in einem Bereich von 50 Gew.-% bis 65 Gew.-%, liegt, jeweils bezogen auf das Gesamtgewicht des Zylinders. Diese Zylinder lieferten gute Ergebnisse hinsichtlich der Förderbarkeit der Partikel sowie in nachfolgenden Applikationen wie dem nichtthermischen Plasmaspritzen. Die guten Ergebnisse auch unter sehr milden Beschichtungsbedingungen werden darauf zurückgeführt, dass die deutlich größere Oberfläche dieser Partikel eine stärkere Aktivierung ermöglicht. Bei einem zu großen Gehalt an plättchenförmigen Partikeln erwies es sich jedoch als problematisch eine ausreichende Stabilität der Zylinder zu gewährleisten. Unter dem Begriff "plättchenförmig" wird im Sinne der vorliegenden Erfindung verstanden, dass entsprechende Partikel ein Aspektverhältnis von mindestens 10 aufweisen. Partikel mit einem Aspektverhältnis von weniger als 10 werden im Sinne der vorliegenden Erfindung als "nichtplättchenförmig" bezeichnet.

Der Begriff "Aspektverhältnis" bezeichnet im Sinne der vorliegenden Erfindung das Verhältnis von mittlerem Partikeldurchmesser ($d_{50}$) zu mittlerer Partikeldicke ($h_{50}$). Der Begriff "$d_{50}$" oder auch "$d_{50}$-Wert" bezeichnet den Wert bei dem 50 % der Partikel in der Summenhäufigkeitsverteilung einen Durchmesser aufweisen, der gleich oder kleiner diesem Wert ist. Die Messungen werden vorzugsweise mit dem Partikelgrößenanalysator HELOS der Fa. Sympatec GmbH, Clausthal-Zellerfeld, Deutschland, durchgeführt. Die Dispergierung eines trockenen Pulvers kann hierbei mit einer Dispergiereinheit vom Typ Rodos T4.1 bei einem Primärdruck von beispielsweise 4 bar erfolgen. Alternativ kann die Größenverteilungskurve der Partikel beispielsweise mit einem Gerät der Fa. Quantachrome (Gerät: Cilas 1064) gemäß Herstellerangaben vermessen werden. Hierzu werden 1,5 g des pulverförmigen Beschichtungsmaterials in ca. 100 ml Ethanol dispergiert, 300 Sekunden im Ultraschallbad (Gerät: Sonorex IK 52, Fa. Bandelin) behandelt und anschließend mittels einer Pasteurpipette in die Probenvorbereitungszelle des Messgerätes gegeben und mehrmals vermessen. Aus den einzelnen Messergebnissen werden die resultierenden Mittelwerte gebildet. Die Auswertung der Streulichtsignale erfolgt dabei nach der Fraunhofer Methode.

Die Dicke der Partikel kann beispielsweise mittels REM wie folgt ermittelt werden. Die erfindungsgemäßen plättchenförmigen Partikel werden zunächst mit Aceton gewaschen und dann ausgetrocknet. Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und die Partikel werden auf das erweichte Harz gestreut. Das Harz wird durch die Abkühlung wieder fest und die aufgestreuten Partikel können - bedingt durch das Wechselspiel zwischen Adhäsion und Schwerkraft - nahezu senkrecht stehend und fixiert auf dem Probenteller präpariert werden. Dadurch sind die Partikel im Elektronenmikroskop seitlich gut zu vermessen. Bei der Vermessung der Dicke wird der azimuthale Winkel $\alpha$ des Partikels zu einer zur Oberfläche normalen Ebene geschätzt und bei der Dickenauswertung nach der Formel

$$h_{eff} = h_{mess}/\cos\alpha$$

berücksichtigt. Von den $h_{eff}$-Werten wird anhand der relativen Häufigkeiten die Summenverteilungskurve erstellt. Es werden ca. 100 Partikel, vorzugsweise 100 Partikel, gezählt.

Sofern die vorgenannte Verfahrensvariante nicht einsetzbar ist, können die Dicken der Partikel beispielsweise auch anhand von Querschliffen von lackierten Proben gezählt werden. Diese Methode sollte jedoch nur bei einer sehr guten planparallelen Orientierung der Partikel angewandt werden. Andernfalls können die Partikel im Querschliff mit einem azimuthalen Neigungswinkel, der jedoch für den Beobachter nicht erkennbar ist, orientiert sein. Dies führt systematisch zu der Messung von höheren Dicken.

Bei weiteren Ausführungsformen liegt die Menge der Partikel im Zylinder in Abhängigkeit von der Menge der plättchenförmigen Partikeln bei x Gew.-% plättchenförmiger Partikel, bezogen auf das Gesamtgewicht der Partikel, im Bereich von (50 Gew.-% - (0,2 x x) Gew-%) bis (99,9 Gew.-% - (0,249 x x) Gew.-%), vorzugsweise im Bereich von (60 Gew.-% - (0,2 x x) Gew.-%) bis (98 Gew.-% - (0,28 × x) Gew.-%), mehr bevorzugt im Bereich von (70 Gew.-% - (0,2 x x) Gew-%) bis (97 Gew.-% - (0,32 x x) Gew.-%), bezogen auf das Gesamtgewicht des Zylinders.

Bei weiteren Ausführungsformen umfasst der erfindungsgemäße Zylinder Füllstoffe, die vorzugsweise ausgewählt werden aus der Gruppe bestehend aus Schichtsilikaten, Tonmineralien, Metalloxiden, Kieselgel, Glaskugeln und Mischungen davon.

Ferner ist es bei weiteren Ausführungsformen bevorzugt, dass die erfindungsgemäßen Zylinder Bornitrid umfassen. Durch den Zusatz von Bornitrid konnte beispielsweise eine erhöhte Abriebbeständigkeit und Wärmeleitfähigkeit erzielt werden. Vorzugsweise liegt die Menge des Bornitrids in einem Bereich von 0,1 Gew.-% bis 50 Gew.-%, mehr bevorzugt in einem Bereich von 0,1 Gew.-% bis 20 Gew.-%, noch mehr bevorzugt in einem Bereich von 0,1 Gew.-% bis 15 Gew.-%, jeweils bezogen auf das Gesamtgewicht der Zylinder.

Bei weiteren Ausführungsformen ist es bevorzugt, dass die Gesamtmenge an Partikeln und Bindemitteln im partikelhaltigen Zylinder mindestens 90 Gew.-%, vorzugsweise mindestens 95 Gew.-%, mehr bevorzugt mindestens 99,9 Gew.-% beträgt, jeweils bezogen auf das Gesamtgewicht des Zylinders. Insbesondere die Verringerung enthaltener nichtreaktiver Füllstoffe hat sich als vorteilhaft erwiesen, da hiermit eine verbesserte Beschichtungsbildung bei beispielsweise verringertem Overspray erzielt werden konnte.

Ferner ist es bei weiteren Ausführungsformen bevorzugt, dass die Partikel des partikelhaltigen Zylinders zu mindestens 90 Gew.-%, vorzugsweise zu mindestens 95 Gew.-%, mehr bevorzugt zu mindestens 99,9 Gew.-% ausgewählt werden aus entweder Metallpartikeln oder Glaspartikeln oder Micapartikeln oder Keramikpartikeln, bezogen auf das Gesamtgewicht der Partikel. Besonders vorteilhaft hat sich die Verwendung von Metallpartikeln und Glaspartikeln, insbesondere Metallpartikeln, erwiesen.

Die erfindungsgemäßen Zylinder können in der Form einzelner Zylinder oder als theoretisch endlose Zylinder eingesetzt werden. Letztere sind beispielsweise mittels einer direkten Extrusion des Zylindermaterials erhältlich, wobei der extrudierte Zylinder direkt in die Fördereinrichtung eingespeist wird. Hierbei sind Bindemittel bevorzugt, welche eine schnelle Verfestigung des Zylindermaterials nach dem Ausformungsschritt bieten, wie beispielsweise mikrokristalline Cellulose. Die Verwendung einer derartigen Kombination eines Ausformungsschrittes mit dem Förderungsschritt ermöglicht eine nahezu unbegrenzte, kontinuierliche Förderung.

Die Verwendung einzelner Zylinder ermöglicht hingegen beispielsweise einen einfacheren Geräteaufbau und ein einfacheres Wechseln zwischen verschiedenen Säulentypen. Hierbei erwies es sich zur Erzielung einer vereinfachten Förderung typischerweise als vorteilhaft, wenn der erfindungsgemäße partikelhaltige Zylinder ein Volumen von mindestens 8 cm$^3$, vorzugsweise von mindestens 11 cm$^3$, mehr bevorzugt von mindestens 19 cm$^3$, noch mehr bevorzugt von mindestens 30 cm$^3$, aufweist.

Die Menge der eingesetzten Bindemittel liegt bei weiteren Ausführungsformen in einem Bereich von 0,05 Gew.-% bis 70 Gew.-%, vorzugsweise in einem Bereich von 0,07 Gew.-% bis 60 Gew.-%, mehr bevorzugt in einem Bereich von 0,1 Gew.-% bis 45 Gew.-%. Ferner liegt bei weiteren Ausführungsformen vorzugsweise die Menge von anorganischem Bindemittel in einem Bereich von 1,5 Gew.-% bis 70 Gew.-% und die Menge von organischen Bindemittel in einem Bereich von 0,05 Gew.-% bis 50 Gew.-%, mehr bevorzugt die Menge von anorganischem Bindemittel in einem Bereich von 1,9 Gew.-% bis 60 Gew.-% und die Menge von organischen Bindemittel in einem Bereich von 0,07 Gew.-% bis 35 Gew.-%, noch mehr bevorzugt die Menge von anorganischem Bindemittel in einem Bereich von 2,2 Gew.-% bis 45 Gew.-% und die Menge von organischen Bindemittel in einem Bereich von 0,1 Gew.-% bis 25 Gew.-%.

Bei weiteren Ausführungsformen ist es bevorzugt, dass mindestens ein Bindemittel des partikelhaltigen Zylinders aus den anorganischen Bindemitteln ausgewählt wird. Diese Bindemittel erwiesen sich als vorteilhaft zur Bereitstellung besonders stabiler Zylinder, welche beispielsweise eine hohe Lagerfähigkeit und Stabilität unter UV-Strahlung bereitstellen. Beispiele derartiger anorganischer Bindemittel sind Calciumsulfat, Talk, Calciumhydroxid, Siliciumoxid, Aluminiumoxid, Calciumcarbonat, Calciumsilikathydrate, Calciumaluminathydrate und Mischungen hiervon, wobei die vorgenannten Stoffe Wasser, insbesondere in der Form von Kristallwasser, umfassen können. Vorzugsweise umfasst der partikelhaltige Zylinder hierbei mindestens 1,5 Gew.-%, mehr bevorzugt mindestens 1,9 Gew.-%, noch mehr bevorzugt mindestens 2,2 Gew.-%, anorganische Bindemittel.

Calciumsulfat und dessen Hydrate sind beispielsweise unter dem Namen Gips käuflich erhältlich. Für die erfindungsgemäßen Applikationen haben sich hochwertige Gipsvarianten wie Dentalgipse und Modellgipse, insbesondere Dentalgipse, als vorteilhaft erwiesen. Es hat gezeigt, dass niederqualitative Gipssorten wie Baugips deutlich schlechtere Ergebnisse lieferten. Es wird vermutet, dass ein kontrolliertes Abbinden zum Erreichen einer homogenen Struktur der Zylinder erforderlich ist. Baugipse hingegen scheinen infolge der preisgetriebenen Massenproduktion eine ungleichmäßigere Zusammensetzung aufzuweisen, wodurch kein einheitliches Abbinden gewährleistet werden kann. Es wird vermutet, dass die unterschiedlichen Gipsmodifikationen, welche durch Variation der Temperatur und Umgebungsbedingungen wie Druck erhalten werden, infolge ihrer unterschiedlichen Eigenschaften nicht die Herstellung hochwertiger erfindungsgemäßer Säulen ermöglichen.

Soweit nicht anderweitig spezifiziert, ist es in der vorliegenden Erfindung besonders bevorzugt, dass "im Wesentlichen" mindestens 95 %, vorzugsweise mindestens 99 %, bedeutet. Soweit es sich auf ein stoffliches Merkmal bezieht, wie beispielsweise die Menge eines stofflichen Bestandteils, so sind hiermit Gew.-% gemeint.

Als vorteilhaft für die meisten Applikationen haben sich Calciumsulfat, Talk, Calciumcarbonat, Siliciumoxid, Mischungen von Calciumsilikathydraten und Calciumaluminathydraten und Mischungen von Calciumhydroxid und Calciumcarbonat, insbesondere Calciumsulfat und Siliciumoxid erwiesen, wobei die vorgenannten Stoffe Wasser, insbesondere in der Form von Kristallwasser, umfassen können. Ein besonders bevorzugtes anorganisches Bindemittel ist Calciumsulfat, wobei das Calciumsulfat Wasser, insbesondere in der Form von Kristallwasser, umfassen kann.

Unter dem Begriff "Calciumsulfat" im Sinne der vorliegenden Erfindung werden auch die Hydrate des Calciumsulfats verstanden. Dieses Bindemittel hat sich als besonders vorteilhaft erwiesen, da es unter den typischen Bedingungen nachfolgender Beschichtungsverfahren ohne merkliche Beeinträchtigung resultierender Beschichtungen appliziert werden kann und infolge seiner geringen Reaktivität für die Formulierung mit einem breiten Spektrum an erfindungsgemäßen Partikeln geeignet ist. Typischerweise weist Calciumsulfat 2 als Kristallwasser gebundene Moleküle Wasser je Calciumsulfatmolekül auf.

Ferner hat sich Siliciumoxid bei weiteren Ausführungsformen als vorteilhaftes Bindemittel erwiesen, wobei der Begriff "Siliciumoxid" im Sinne der vorliegenden Erfindung auch die Hydrate des Siliciumoxids umfasst. Vorzugsweise handelt es sich bei dem Siliciumoxid der vorliegenden Erfindung im Wesentlichen um Siliciumdioxid. Bei der Verwendung von Siliciumoxid kann beispielsweise die Stabilität hiermit erhaltener Zylinder in einem breiten Spektrum durch verfahrenstechnische Details wie den Bedingungen des Aushärtens sowie der Variation der Edukte bestimmt werden. Beispielsweise können allein bei Aushärtung unter Raumtemperatur unterschiedliche Ergebnisse durch Einsatz eines definierten Gasstroms wie Luft oder $CO_2$, der Dauer des Gasstroms, sowie der eingesetzten Menge des Gases erzielt werden. Bei der Verwendung von Wasserglas kann ferner beispielsweise durch den Zusatz von amorphen Silicium die Härte des erhaltenen Zylinders variiert werden. Somit kann aus einem einfachen und kostengünstigen Grundsystem das vom Kunden gewünschte Produkt gezielt hergestellt werden.

Bei weiteren Ausführungsformen ist es ferner bevorzugt, dass mindestens ein Bindemittel des partikelhaltigen Zylinders ein organisches Bindemittel ist, das ausgewählt wird aus der Gruppe bestehend aus Cellulose; Cellulosederivaten wie Methylcellulose, Ethylcellulose, mikrokristalline Cellulose, Hydroxyethylcellulose, Hydroxypropylcellulose, Hydroxypropylmethylcellulose, Carboxyethylcellulose und Carboxymethylcellulose; Polysacchariden wie Alginsäure, Alginsäurederivate, Stärke, Stärkederivate, Xanthan, Dextrine, Dextrane, Guarkernmehl, Johannisbrotkernmehl, Carageen und Pullulan; Gelatine; Polyvinylen wie Polyvinylalkohole und Polyvinylpyrrolidone; Polyacrylaten wie Polyacrylsäuren und Polyacrylsäureester; Polyethylenoxiden; Polyethylenglykolen; Polyamiden; Epoxidharzen; den Salzen der vorgenannten Stoffe und Mischungen hiervon. Diese Bindemittel weisen beispielsweise den Vorteil auf, dass sie in der Flamme eines Beschichtungsverfahrens zumindest teilweise, bevorzugt vollständig, verbrennen können und das entstehende Gas nicht in die Beschichtung eingebaut wird und somit leicht abgetrennt werden kann. Bevorzugte Salze sind Alkali und Erdalkalisalze wie Natriumsalze, Kaliumsalze, Ammoniumsalze und Calciumsalze. Ferner ist es bevorzugt, dass die Cellulosederivate wasserlöslich sind. Polyacrylsäuren sind beispielsweise unter dem Namen CARBOPOL wie CARBOPOL 941 und CARBOPOL 934 erhältlich. Vorzugsweise umfasst der partikelhaltige Zylinder hierbei mindestens 0,05 Gew.-%, mehr bevorzugt mindestens 0,07 Gew.-%, noch mehr bevorzugt mindestens 0,1 Gew.-%, organische Bindemittel.

Bei weiteren Ausführungsformen wird das organische Bindemittel vorzugsweise ausgewählt aus der Gruppe bestehend aus Cellulose; Cellulosederivaten wie Methylcellulose, Ethylcellulose, mikrokristalline Cellulose, Hydroxyethylcellulose, Hydroxypropylcellulose, Hydroxypropylmethylcellulose, Carboxyethylcellulose und Carboxymethylcellulose; Polysacchariden wie Alginsäure, Alginsäurederivate, Stärke, Stärkederivate, Xanthan, Dextrine, Dextrane, Guarkernmehl, Johannisbrotkernmehl, Carageen und Pullulan; Gelatine; Polyvinylen wie Polyvinylalkohole und Polyvinylpyrrolidone; Polyacrylaten wie Polyacrylsäuren und Polyacrylsäureester; Polyethylenoxiden; Polyethylenglykolen; Polyamiden; den Salzen der vorgenannten Stoffe und Mischungen hiervon, mehr bevorzugt ausgewählt aus der Gruppe bestehend aus Cellulose; Cellulosederivaten wie Methylcellulose, Ethylcellulose, mikrokristalline Cellulose, Hydroxyethylcellulose, Hydroxypropylcellulose, Hydroxypropylmethylcellulose, Carboxyethylcellulose und Carboxymethylcellulose; Polysacchariden wie Alginsäure, Alginsäurederivate, Stärke, Stärkederivate, Xanthan, Dextrine, Dextrane, Guarkernmehl, Johannisbrotkernmehl, Carageen und Pullulan; den Salzen der vorgenannten Stoffe und Mischungen hiervon.

Der Begriff "Polymere" umfasst erfindungsgemäß auch Oligomere. Vorzugsweise weisen die erfindungsgemäßen Polymere wie beispielsweise Cellulosederivate, Polysaccharide, Polyvinyle, Polyacrylate und Polyethylenglykole mindestens 10 Monomereinheiten, mehr bevorzugt mindestens 20 Monomereinheiten, noch mehr bevorzugt mindestens 60 Monomereinheinten auf.

Insbesondere ist es bei weiteren Ausführungsformen bevorzugt, dass das Bindemittel ausgewählt wird aus der Gruppe bestehend aus Calciumsulfat, Talk, Calciumcarbonat, Siliciumoxid, Mischungen von Calciumsilikathydraten und Calciumaluminathydraten, Mischungen von Calciumhydroxid und Calciumcarbonat, Cellulose, Cellulosederivaten, Polysacchariden, Polyvinylen, Polyacrylaten, Polyethylenoxiden, Polyethylenglykolen, Polyamiden, den Salzen der vorgenannten Stoffe und Mischungen hiervon, vorzugsweise aus der Gruppe bestehend aus Calciumsulfat, Siliciumoxid, Cellulose, Cellulosederivaten, Polysacchariden, Polyvinylen, den Salzen der vorgenannten Stoffe und Mischungen hiervon, mehr bevorzugt aus der Gruppe bestehend aus Calciumsulfat, Siliciumoxid, Cellulosederivaten, Polysacchariden, den Salzen der vorgenannten Stoffe und Mischungen hiervon. Die vorgenannten Bindemittel Calciumsulfat und Siliciumoxid können Wasser in gebundener Form, insbesondere als Kristallwasser, umfassen. Als erfindungsgemäß besonders vorteilhafte Bindemittel haben sich Calciumsulfat und Cellulosederivate erwiesen.

Bei weiteren Ausführungsformen sind die Partikel des partikelhaltigen Zylinders zu mindestens 75 Gew.-%, vorzugsweise zu mindestens 87 Gew.-%, mehr bevorzugt zu mindestens 98 Gew.- % Metallpartikel, bezogen auf das Gesamtgewicht der Partikel. Unter dem Begriff "Metallpartikel" wird im Sinne der vorliegenden Erfindung verstanden, dass die Partikel zu mindestens 80 Gew.-%, mehr bevorzugt zu mindestens 90 Gew.-% aus elementaren Metall, Metallgemischen oder Metalllegierungen bestehen.

Bei weiteren Ausführungsformen wird das Metall der Metallpartikel zu mindestens 90 Gew.-% ausgewählt aus der Gruppe bestehend aus Aluminium, Kupfer, Zinn, Zink, Eisen, Silber, Titan, Nickel, Gold, Platin, Magnesium, Wolfram, Molybdän, Vanadium, Mischungen hiervon und Legierungen hiervon.

Bei weiteren Ausführungsformen umfasst das Metall der Metallpartikel zu höchstens 5 Gew.-%, mehr bevorzugt zu höchstens 2 Gew.-%, mehr bevorzugt zu höchstens 1 Gew.-%, Metalle die ausgewählt werden aus der Gruppe bestehend aus Silber, Palladium, Platin, Gold, Mischungen davon und Legierungen davon.

Bei weiteren Ausführungsformen werden die Metallpartikel vorzugsweise ausgewählt aus unbeschichteten Metallpartikeln und beschichteten Metallpartikeln, wobei die Menge der Beschichtung der beschichteten Metallpigmente höchstens 15 Gew.-%, vorzugsweise höchstens 12 Gew.-%, mehr bevorzugt höchstens 10 Gew.-% beträgt, bezogen auf das Gesamtgewicht der beschichteten Metallpigmente.

Die Herstellung der erfindungsgemäßen Zylinder kann beispielsweise erfolgen durch Herstellung einer Paste umfassend Partikel, Gips (Calciumsulfat) und Wasser, Einfüllen der Paste in eine Form und Aushärten der Paste. Zur Erleichterung der Verarbeitung kann auch eine überproportionale Menge an Wasser eingesetzt werden, welches nachfolgend mittels Trockenvorgängen wieder entfernt werden kann. Die Trocknung kann beispielsweise auch unter Verwendung eines Trockenschrankes beschleunigt werden. Hierbei werden zur Herstellung der Zylinder unter Einsatz anorganischer Bindemittel vorzugsweise reaktive Formen wie Calciumsulfat Semihydrat verwendet. Ferner können beispielsweise Gemische aus Partikeln mit organischen Bindemitteln wie Polysacchariden, Cellulose und Cellulosederivaten hergestellt und mittels Kompression verfestigt werden. Zudem können auch organische Bindemittel mittels eines Lösungsmittels wie Wasser oder einem organischen Lösungsmittel in eine Pastenform überführt und in die gewünschte Form gebracht werden. Die erfindungsgemäßen Zylinder können nachfolgend durch Trocknen der Pasten erhalten werden.

Hingegen zeigen beispielsweise Zylinder, die durch in-situ Pulverpressungen hergestellt werden, und welche anschließend in einem Förderverfahren eingesetzt werden, eine sehr inhomogene Zusammensetzung mit insbesondere Dichtegradienten, wodurch die Erzeugung eines gleichmäßigen Aerosolstroms schwer bis unmöglich wird. Die erfindungsgemäßen Zylinder besitzen eine sehr homogene Zusammensetzung insbesondere hinsichtlich der Verteilung der hierin enthaltenen Partikel. Somit wird die gleichmäßige und reproduzierbare Förderung der enthaltenen Partikel ermöglicht, während gleichzeitig die geförderten Partikel in verschiedenster Art variiert werden können, ohne eine spezifische Anpassung der Förderparameter zu erfordern. Die besonders homogene Struktur der erfindungsgemäßen Zylinder kann beispielsweise mittels der mittleren Dichte nachgewiesen werden. Hierzu werden mindestens 3, vorzugsweise drei, Scheiben aus der Säule senkrecht zur Längsachse geschnitten, wobei die Dicke der Scheiben mindestens 1 cm, vorzugsweise 1 cm, beträgt. Nachfolgend werden die Scheiben in drei, vorzugsweise ungefähr gleichgroße, Teilstücke zerschnitten und deren mittlere Dichte bestimmt. Die Bestimmung der mittleren Dichte erfolgt beispielsweise mittels eines Heliumpyknometers Typ Multipycnometer (Fa. Quantachrome). Vorzugsweise beträgt die Abweichung der mittleren Dichte der Proben höchstens 10 %, mehr bevorzugt höchstens 7 %, noch mehr bevorzugt höchstens 3 %, bezogen auf das arithmetische Mittel der Proben.

Ferner betrifft die vorliegende Erfindung die Verwendung eines erfindungsgemäßen partikelhaltigen Zylinders zur Erzeugung eines partikelhaltigen Aerosols. Vorzugsweise wird eine der vorgenannten spezifischen Formen der Zylinder verwendet.

Ferner betrifft die vorliegende Erfindung einen beschichteten Gegenstand, wobei die Beschichtung unter Einsatz eines Aerosols erfolgte, welches mittels eines Verfahrens gemäß einem der Ansprüche 1 bis 12 oder einem der Aspekte 1 bis 28 und/oder unter Verwendung mindestens eines Zylinders gemäß einem der Ansprüche 13 bis 14 oder einem der Aspekte 29 bis 50 erzeugt wurde.

Gemäß einem Aspekt 1 betrifft die vorliegenden Erfindung vorzugsweise ein Verfahren zur Herstellung eines partikelhaltigen Aerosols, wobei ein partikelhaltiger Zylinder zerkleinert wird, wobei der Zylinder ein Volumen von mindestens 5 cm$^3$ aufweist und formstabil ist, die Biegefestigkeit $\sigma$ höchstens 3,75 N/mm$^2$, mehr bevorzugt höchstens 2,1 N/mm$^2$, noch mehr bevorzugt höchstens 1,2 N/mm$^2$, noch mehr bevorzugt höchstens 0,675 N/mm$^2$, beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, l = Abstand zwischen den beiden Auflagepunkten,
der Anteil an Partikeln im Bereich von 10 Gew.-% bis 99,9 Gew.-% liegt, bezogen auf das Gesamtgewicht des Zylinders, die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 $\mu$m aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon.

Gemäß einem Aspekt 2 betrifft die vorliegende Erfindung vorzugsweise ein Verfahren gemäß Aspekt 1, wobei die anorganischen Bindemittel ausgewählt werden aus Calciumsulfat, Talk, Calciumhydroxid, Siliciumoxid, Aluminiumoxid, Calciumcarbonat, Calciumsilikathydrate, Calciumaluminathydrate und Mischungen hiervon.

Gemäß einem Aspekt 3 betrifft die vorliegende Erfindung vorzugsweise ein Verfahren gemäß einem der Aspekte 1 bis 2, wobei die organischen Bindemittel ausgewählt werden aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

Gemäß einem Aspekt 4 betrifft die vorliegende Erfindung vorzugsweise ein Verfahren gemäß einem der Aspekte 1 bis 3, wobei der Zylinder eine Biegefestigkeit von mindestens 0,0075 N/mm$^2$, mehr bevorzugt mindestens 0,0105 N/mm$^2$, noch mehr bevorzugt mindestens 0,012 N/mm$^2$, noch mehr bevorzugt mindestens 0,015 N/mm$^2$, aufweist.

Gemäß einem Aspekt 5 betrifft die vorliegende Erfindung vorzugsweise ein Verfahren gemäß einem der Aspekte 1 bis 4, wobei das partikelhaltige Aerosol als kontinuierlicher Aerosolstrom weitergeleitet wird.

Gemäß einem Aspekt 6 betrifft die vorliegende Erfindung vorzugsweise ein Verfahren gemäß einem der Aspekte 1 bis 5, wobei das partikelhaltige Aerosol in einem Beschichtungsverfahren eingesetzt wird, das ausgewählt wird aus der Gruppe bestehend aus Kaltgasspritzen, Flammspritzen, Hochgeschwindigkeitsflammspritzen, thermischem Plasmaspritzen und nichtthermischem Plasmaspritzen, vorzugsweise ausgewählt aus der Gruppe bestehend aus thermischem Plasmaspritzen und nichtthermischem Plasmaspritzen. Insbesondere ist es bevorzugt, dass das Beschichtungsverfahren das nichtthermische Plasmaspritzen ist.

Gemäß einem Aspekt 7 betrifft die vorliegende Erfindung vorzugsweise ein Verfahren gemäß einem der Aspekte 1 bis 6, wobei das Zerkleinern des partikelhaltigen Zylinders mittels einer Bürste oder eines Schleifbandes erfolgt.

Gemäß einem Aspekt 8 betrifft die vorliegende Erfindung vorzugsweise ein Verfahren gemäß einem der Aspekte 1 bis 7, wobei die Höhe des partikelhaltigen Zylinders das mindestens 2-fache, vorzugsweise das mindestens 3-fache, mehr bevorzugt das mindestens 4-fache, des arithmetischen Mittels der längsten Achsen entlang der Grundfläche und der Deckfläche beträgt.

Gemäß einem Aspekt 9 betrifft die vorliegende Erfindung vorzugsweise ein Verfahren gemäß einem der Aspekte 1 bis 8, wobei der Zylinder mindestens 1,5 Gew.-% anorganische Bindemittel oder mindestens 0,01 Gew.-% organische Bindemittel aufweist.

Gemäß einem Aspekt 10 betrifft die vorliegende Erfindung vorzugsweise ein Verfahren gemäß einem der Aspekte 1 bis 9, wobei der Anteil an nichtplättchenförmigen Partikeln in dem partikelhaltigen Zylinder in einem Bereich von 50 Gew.-% bis 99,9 Gew.-%, vorzugsweise in einem Bereich von 60 Gew.-% bis 98 Gew.-%, mehr bevorzugt in einem Bereich von 70 Gew.- % bis 97 Gew.-%, liegt, jeweils bezogen auf das Gesamtgewicht des Zylinders.

Gemäß einem Aspekt 11 betrifft die vorliegende Erfindung vorzugsweise ein Verfahren gemäß einem der Aspekte 1 bis 10, wobei die in dem Zylinder enthaltenen Partikel einen $d_{50}$ in einem Bereich von 1 $\mu$m bis 300 $\mu$m, vorzugsweise in einem Bereich von 1,5 $\mu$m bis 230 $\mu$m, vorzugsweise in einem Bereich von 2 $\mu$m bis 180 $\mu$m, mehr bevorzugt in einem Bereich von 2,5 $\mu$m bis 150 $\mu$m, aufweisen.

Gemäß einem Aspekt 12 betrifft die vorliegende Erfindung vorzugsweise ein Verfahren gemäß einem der Aspekte 1 bis 9 oder gemäß Aspekt 11, wobei der Anteil an plättchenförmigen Partikeln in dem partikelhaltigen Zylinder in einem Bereich von 30 Gew.-% bis 75 Gew.-%, vorzugsweise in einem Bereich von 40 Gew.-% bis 70 Gew.-%, mehr bevorzugt in einem Bereich von 50 Gew.-% bis 65 Gew.-%, liegt, jeweils bezogen auf das Gesamtgewicht des Zylinders.

Gemäß einem Aspekt 13 betrifft die vorliegende Erfindung vorzugsweise ein Verfahren gemäß einem der Aspekte 1 bis 12, wobei die Menge der Partikel im Zylinder in Abhängigkeit von der Menge der plättchenförmigen Partikel bei x Gew.-% plättchenförmiger Partikel, bezogen auf das Gesamtgewicht der Partikel, im Bereich von (50 Gew.-% - (0,2 × x) Gew-%) bis (99,9 Gew.-% - (0,249 x x) Gew.-%), bezogen auf das Gesamtgewicht des Zylinders, liegt. Vorzugsweise liegt die Menge der Partikel im Bereich von (60 Gew.-% - (0,2 x x) Gew-%) bis (98 Gew.-% - (0,28 x x) Gew.-%), mehr bevorzugt im Bereich von (70 Gew.-% - (0,2 x x) Gew-%) bis (97 Gew.-% - (0,32 x x) Gew.-%), bezogen auf das Gesamtgewicht des Zylinders.

Gemäß einem Aspekt 14 betrifft die vorliegende Erfindung vorzugsweise ein Verfahren gemäß einem der Aspekte 1 bis 13, wobei die Gesamtmenge an Partikeln und Bindemitteln im partikelhaltigen Zylinder mindestens 90 Gew.-%, vorzugsweise mindestens 95 Gew.-%, mehr bevorzugt mindestens 99,9 Gew.-%, beträgt, bezogen auf das Gesamtgewicht des Zylinders.

Gemäß einem Aspekt 15 betrifft die vorliegende Erfindung vorzugsweise ein Verfahren gemäß einem der Aspekte 1 bis 14, wobei die Partikel des partikelhaltigen Zylinders zu mindestens 90 Gew.-%, vorzugsweise zu mindestens 95 Gew.-%, mehr bevorzugt zu mindestens 99,9 Gew.-%, ausgewählt werden aus entweder Metallpartikeln oder Glaspartikeln oder Micapartikeln oder Keramikpartikeln, bezogen auf das Gesamtgewicht der Partikel. Vorzugsweise werden die Partikel des partikelhaltigen Zylinders zu mindestens 90 Gew.-%, vorzugsweise zu mindestens 95 Gew.-%, mehr bevorzugt zu mindestens 99,9 Gew.-%, ausgewählt aus entweder Metallpartikeln oder Glaspartikeln, mehr bevorzugt Metallpartikeln, bezogen auf das Gesamtgewicht der Partikel.

Gemäß einem Aspekt 16 betrifft die vorliegende Erfindung vorzugsweise ein Verfahren gemäß einem der Aspekte 1 bis 15, wobei der partikelhaltige Zylinder ein Volumen von mindestens 8 cm$^3$, vorzugsweise von mindestens 11 cm$^3$, mehr bevorzugt von mindestens 19 cm$^3$, noch mehr bevorzugt von mindestens 30 cm$^3$, aufweist.

Gemäß einem Aspekt 17 betrifft die vorliegende Erfindung vorzugsweise ein Verfahren gemäß einem der Aspekte 1 bis 16, wobei die Menge des Bindemittels in dem partikelhaltigen Zylinder in einem Bereich von 0,05 Gew.-% bis 70 Gew.-%, vorzugsweise in einem Bereich von 0,07 Gew.-% bis 60 Gew.-%, mehr bevorzugt in einem Bereich von 0,1 Gew.-% bis 45 Gew.-%, liegt.

Gemäß einem Aspekt 18 betrifft die vorliegende Erfindung vorzugsweise ein Verfahren gemäß einem der Aspekte 1 bis 17, wobei der partikelhaltige Zylinder mindestens 1,5 Gew.-%, vorzugsweise mindestens 1,9 Gew.-%, mehr bevorzugt mindestens 2,2 Gew.-%, anorganische Bindemittel umfasst.

Gemäß einem Aspekt 19 betrifft die vorliegende Erfindung vorzugsweise ein Verfahren gemäß einem der Aspekte 1 bis 18, wobei das anorganische Bindemittel ausgewählt wird aus der Gruppe bestehend aus Calciumsulfat und Siliciumoxid.

Gemäß einem Aspekt 20 betrifft die vorliegende Erfindung vorzugsweise ein Verfahren gemäß einem der Aspekte 1 bis 19, wobei der partikelhaltige Zylinder mindestens 0,05 Gew.-%, vorzugsweise mindestens 0,07 Gew.-%, mehr bevorzugt mindestens 0,1 Gew.-%, organische Bindemittel umfasst.

Gemäß einem Aspekt 21 betrifft die vorliegende Erfindung vorzugsweise ein Verfahren gemäß einem der Aspekte 1 bis 20, wobei das organische Bindemittel ausgewählt wird aus der Gruppe bestehend aus Cellulosederivaten und Polysacchariden. Vorzugsweise wird das organische Bindemittel ausgewählt aus der Gruppe bestehend aus Stärke und Cellulosederivaten. Beispiele der Cellulosederivate sind Methylcellulose und Ethylcellulose.

Gemäß einem Aspekt 22 betrifft die vorliegende Erfindung vorzugsweise ein Verfahren gemäß einem der Aspekte 1 bis 21, wobei mindestens ein Bindemittel des partikelhaltigen Zylinders ausgewählt wird aus der Gruppe bestehend aus Calciumsulfat, Talk, Calciumcarbonat, Siliciumoxid, Mischungen von Calciumsilikathydraten und Calciumaluminathydraten, Mischungen von Calciumhydroxid und Calciumcarbonat, Cellulose, Cellulosederivaten, Polysacchariden, Gelatine, Polyvinylen, Polyacrylaten, Polyethylenoxiden, Polyethylenglykolen, Polyamiden, den Salzen der vorgenannten Stoffe und Mischungen hiervon, vorzugsweise aus der Gruppe bestehend aus Calciumsulfat, Siliciumoxid, Cellulose, Cellulosederivaten, Polysacchariden, Polyvinylen, den Salzen der vorgenannten Stoffe und Mischungen hiervon, mehr bevorzugt aus der Gruppe bestehend aus Calciumsulfat, Siliciumoxid, Cellulosederivaten, Polysacchariden, den Salzen der vorgenannten Stoffe und Mischungen hiervon. Insbesondere ist es bevorzugt, dass das Bindemittel ausgewählt wird aus der Gruppe bestehend aus Calciumsulfat und Cellulosederivaten.

Gemäß einem Aspekt 23 betrifft die vorliegende Erfindung vorzugsweise ein Verfahren gemäß einem der Aspekte 1 bis 22, wobei die Partikel des partikelhaltigen Zylinders zu mindestens 75 Gew.-%, vorzugsweise zu mindestens 87 Gew.-%, mehr bevorzugt zu mindestens 98 Gew.- %, Metallpartikel sind, bezogen auf das Gesamtgewicht der Partikel.

Gemäß einem Aspekt 24 betrifft die vorliegende Erfindung vorzugsweise ein Verfahren gemäß einem der Aspekte 1 bis 23, wobei das Metall der Metallpartikel zu mindestens 90 Gew.-% ausgewählt wird aus der Gruppe bestehend aus Aluminium, Kupfer, Zinn, Zink, Eisen, Silber, Titan, Nickel, Gold, Platin, Magnesium, Wolfram, Molybdän, Vanadium, Mischungen hiervon und Legierungen hiervon.

Gemäß einem Aspekt 25 betrifft die vorliegende Erfindung vorzugsweise ein Verfahren gemäß einem der Aspekte 1 bis 24, wobei das Metall der Metallpartikel zu höchstens 5 Gew.-%, mehr bevorzugt zu höchstens 2 Gew.-%, mehr bevorzugt zu höchstens 1 Gew.-%, ausgewählt wird aus der Gruppe bestehend aus Silber, Palladium, Platin, Gold, Mischungen davon und Legierungen davon.

Gemäß einem Aspekt 26 betrifft die vorliegende Erfindung vorzugsweise ein Verfahren gemäß einem der Aspekte 1 bis 25, wobei die Metallpartikel ausgewählt werden aus unbeschichteten Metallpartikeln und beschichteten Metallpartikeln, wobei die Menge der Beschichtung durchschnittlich höchstens 15 Gew.-%, vorzugsweise höchstens 12 Gew.-%, mehr bevorzugt höchstens 10 Gew.-% beträgt, bezogen auf das Gesamtgewicht der beschichteten Metallpigmente.

Gemäß einem Aspekt 27 betrifft die vorliegende Erfindung vorzugsweise ein Verfahren zur Beschichtung eines Substrats, wobei es die folgenden Schritte umfasst

a) Herstellung eines partikelhaltigen Aerosols gemäß einem der Aspekte 1 bis 26,
b) Abscheidung der Partikel auf einem Substrat durch ein Beschichtungsverfahren das ausgewählt wird aus der Gruppe bestehend aus Kaltgasspritzen, Flammspritzen, Hochgeschwindigkeitsflammspritzen, thermischem Plasmaspritzen und nichtthermischem Plasmaspritzen. Vorzugsweise ist das Beschichtungsverfahren gemäß Schritt b) das nichtthermische Plasmaspritzen.

Gemäß einem Aspekt 28 betrifft die vorliegende Erfindung vorzugsweise ein Verfahren gemäß Aspekt 27, wobei das partikelhaltige Aerosol von Schritt a) als kontinuierlicher Aerosolstrom dem Beschichtungsverfahren gemäß Schritt b) zugeführt wird.

Gemäß einem Aspekt 29 betrifft die vorliegende Erfindung vorzugsweise einen partikelhaltigen Zylinder, wobei der Zylinder ein Volumen von mindestens 5 cm$^3$ aufweist und formstabil ist, der Anteil an Partikeln im Bereich von 10 Gew.-% bis 99,9 Gew.-% liegt, bezogen auf das Gesamtgewicht des Zylinders, die Biegefestigkeit $\sigma$ höchstens 3,75 N/mm$^2$,mehr bevorzugt höchstens 2,1 N/mm$^2$, noch mehr bevorzugt höchstens 1,2 N/mm$^2$, noch mehr bevorzugt höchstens 0,675 N/mm$^2$, beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten,

die Partikel ausgewählt werden aus der Gruppe bestehend aus Metallpartikeln, Glaspartikeln, Micapartikeln, Keramikpartikeln und Mischungen hiervon,

die in dem Zylinder enthaltenen Partikel einen $d_{50}$ von maximal 300 $\mu$m aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon

Gemäß einem Aspekt 30 betrifft die vorliegende Erfindung vorzugsweise einen partikelhaltigen Zylinder gemäß Aspekt 29, wobei die anorganischen Bindemittel ausgewählt werden aus Calciumsulfat, Talk, Calciumhydroxid, Siliciumoxid, Aluminiumoxid, Calciumcarbonat, Calciumsilikathydrate, Calciumaluminathydrate und Mischungen hiervon.

Gemäß einem Aspekt 31 betrifft die vorliegende Erfindung vorzugsweise einen partikelhaltigen Zylinder gemäß einem der Aspekte 29 bis 30, wobei die organischen Bindemittel ausgewählt werden aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

Gemäß einem Aspekt 32 betrifft die vorliegende Erfindung vorzugsweise einen partikelhaltigen Zylinder gemäß einem der Aspekte 29 bis 31, wobei der Zylinder eine Biegefestigkeit von mindestens 0,0075 N/mm², mehr bevorzugt, mindestens 0,0105 N/mm², noch mehr bevorzugt mindestens 0,012 N/mm², noch mehr bevorzugt mindestens 0,015 N/mm², aufweist.

Gemäß einem Aspekt 33 betrifft die vorliegende Erfindung vorzugsweise einen partikelhaltigen Zylinder gemäß einem der Aspekt 29 bis 32, wobei die Höhe des partikelhaltigen Zylinders das mindestens 2-fache, vorzugsweise das mindestens 3-fache, mehr bevorzugt das mindestens 4-fache, des arithmetischen Mittels der längsten Achsen entlang der Grundfläche und der Deckfläche beträgt.

Gemäß einem Aspekt 34 betrifft die vorliegende Erfindung vorzugsweise einen partikelhaltigen Zylinder gemäß einem der Aspekt 29 bis 33, wobei der Anteil an nichtplättchenförmigen Partikeln in dem partikelhaltigen Zylinder in einem Bereich von 50 Gew.-% bis 99,9 Gew.-%, vorzugsweise in einem Bereich von 60 Gew.-% bis 98 Gew.-%, mehr bevorzugt in einem Bereich von 70 Gew.-% bis 97 Gew.-%, liegt, jeweils bezogen auf das Gesamtgewicht des Zylinders.

Gemäß einem Aspekt 35 betrifft die vorliegende Erfindung vorzugsweise einen partikelhaltigen Zylinder gemäß einem der Aspekt 29 bis 34, wobei die in dem Zylinder enthaltenen Partikel einen $d_{50}$ in einem Bereich von 1 $\mu$m bis 300 $\mu$m, vorzugsweise in einem Bereich von 1,5 $\mu$m bis 230 $\mu$m, vorzugsweise in einem Bereich von 2 $\mu$m bis 180 $\mu$m, mehr bevorzugt in einem Bereich von 2,5 $\mu$m bis 150 $\mu$m, aufweisen.

Gemäß einem Aspekt 36 betrifft die vorliegende Erfindung vorzugsweise einen partikelhaltigen Zylinder gemäß einem der Aspekt 29 bis 35, wobei der Anteil an plättchenförmigen Metallpartikeln in dem partikelhaltigen Zylinder in einem Bereich von 30 Gew.-% bis 75 Gew.-%, vorzugsweise in einem Bereich von 40 Gew.-% bis 70 Gew.-%, mehr bevorzugt in einem Bereich von 50 Gew.-% bis 65 Gew.-%, liegt, jeweils bezogen auf das Gesamtgewicht des Zylinders.

Gemäß einem Aspekt 37 betrifft die vorliegende Erfindung vorzugsweise einen partikelhaltigen Zylinder gemäß einem der Aspekt 29 bis 36, wobei die Menge der Partikel im Zylinder in Abhängigkeit von der Menge der plättchenförmigen Partikeln bei x Gew.-% plättchenförmiger Partikel, bezogen auf das Gesamtgewicht der Partikel, im Bereich von (50 Gew.-% - (0,2 x x) Gew-%) bis (99,9 Gew.-% - (0,249 x x) Gew.-%), bezogen auf das Gesamtgewicht des Zylinders, beträgt. Vorzugsweise liegt die Menge der Partikel im Bereich von (60 Gew.-% - (0,2 × x) Gew-%) bis (98 Gew.-% - (0,28 x x) Gew.-%), mehr bevorzugt im Bereich von (70 Gew.-% - (0,2 x x) Gew-%) bis (97 Gew.-% - (0,32 x x) Gew.-%), bezogen auf das Gesamtgewicht des Zylinders.

Gemäß einem Aspekt 38 betrifft die vorliegende Erfindung vorzugsweise einen partikelhaltigen Zylinder gemäß einem der Aspekt 29 bis 37, wobei die Gesamtmenge an Partikeln und Bindemitteln im partikelhaltigen Zylinder mindestens 90 Gew.-%, vorzugsweise mindestens 95 Gew.-%, mehr bevorzugt mindestens 99,9 Gew.-%, beträgt, bezogen auf das Gesamtgewicht des Zylinders.

Gemäß einem Aspekt 39 betrifft die vorliegende Erfindung vorzugsweise einen partikelhaltigen Zylinder gemäß einem der Aspekt 29 bis 38, wobei die Partikel des partikelhaltigen Zylinders zu mindestens 90 Gew.-%, vorzugsweise zu mindestens 95 Gew.-%, mehr bevorzugt zu mindestens 99,9 Gew.-% ausgewählt werden aus entweder Metallpartikeln oder Glaspartikeln oder Micapartikeln oder Keramikpartikeln, bezogen auf das Gesamtgewicht der Partikel. Vorzugsweise werden die Partikel des partikelhaltigen Zylinders zu mindestens 90 Gew.-%, vorzugsweise zu mindestens 95 Gew.-%, mehr bevorzugt zu mindestens 99,9 Gew.-%, ausgewählt aus entweder Metallpartikeln oder Glaspartikeln, mehr bevorzugt Metallpartikeln, bezogen auf das Gesamtgewicht der Partikel.

Gemäß einem Aspekt 40 betrifft die vorliegende Erfindung vorzugsweise einen partikelhaltigen Zylinder gemäß einem der Aspekt 29 bis 39, wobei der partikelhaltige Zylinder ein Volumen von mindestens 8 cm³, vorzugsweise von mindestens 11 cm³, mehr bevorzugt von mindestens 19 cm³, noch mehr bevorzugt von mindestens 30 cm³, aufweist

Gemäß einem Aspekt 41 betrifft die vorliegende Erfindung vorzugsweise einen partikelhaltigen Zylinder gemäß einem der Aspekt 29 bis 40, wobei die Menge des Bindemittels in dem partikelhaltigen Zylinder in einem Bereich von 0,05 Gew.-% bis 70 Gew.-%, vorzugsweise in einem Bereich von 0,07 Gew.-% bis 60 Gew.-%, mehr bevorzugt in einem Bereich von 0,1 Gew.-% bis 45 Gew.-%, liegt.

Gemäß einem Aspekt 42 betrifft die vorliegende Erfindung vorzugsweise einen partikelhaltigen Zylinder gemäß einem der Aspekt 29 bis 41, wobei der partikelhaltige Zylinder mindestens 1,5 Gew.-%, vorzugsweise mindestens 1,9 Gew.-%, mehr bevorzugt mindestens 2,2 Gew.-%, anorganische Bindemittel umfasst.

Gemäß einem Aspekt 43 betrifft die vorliegende Erfindung vorzugsweise einen partikelhaltigen Zylinder gemäß einem der Aspekt 29 bis 42, wobei das anorganische Bindemittel ausgewählt wird aus der Gruppe bestehend aus Calciumsulfat und Siliciumoxid.

Gemäß einem Aspekt 44 betrifft die vorliegende Erfindung vorzugsweise einen partikelhaltigen Zylinder gemäß einem der Aspekt 29 bis 43, wobei der partikelhaltige Zylinder mindestens 0,05 Gew.-%, vorzugsweise mindestens 0,07 Gew.-%, mehr bevorzugt mindestens 0,1 Gew.-%, organische Bindemittel umfasst.

Gemäß einem Aspekt 45 betrifft die vorliegende Erfindung vorzugsweise einen partikelhaltigen Zylinder gemäß einem der Aspekt 29 bis 44, wobei das organische Bindemittel ausgewählt wird aus der Gruppe bestehend aus Cellulosederivaten und Polysacchariden. Vorzugsweise wird das organische Bindemittel ausgewählt aus der Gruppe bestehend aus Stärke und Cellulosederivaten wie Methylcellulose und Ethylcellulose.

Gemäß einem Aspekt 46 betrifft die vorliegende Erfindung vorzugsweise einen partikelhaltigen Zylinder gemäß einem der Aspekt 29 bis 45, wobei mindestens ein Bindemittel des partikelhaltigen Zylinders ausgewählt wird aus der Gruppe bestehend aus Calciumsulfat, Talk, Calciumcarbonat, Siliciumoxid, Mischungen von Calciumsilikathydraten und Calciumaluminathydraten, Mischungen von Calciumhydroxid und Calciumcarbonat, Cellulose, Cellulosederivaten, Polysacchariden, Polyvinylen, Polyacrylaten, Polyethylenoxiden, Polyethylenglykolen, Polyamiden, den Salzen der vorgenannten Stoffe und Mischungen hiervon, vorzugsweise aus der Gruppe bestehend aus Calciumsulfat, Siliciumoxid, Cellulose, Cellulosederivaten, Polysacchariden, Polyvinylen, den Salzen der vorgenannten Stoffe und Mischungen hiervon, mehr bevorzugt aus der Gruppe bestehend aus Calciumsulfat, Siliciumoxid, Cellulosederivaten, Polysacchariden, den Salzen der vorgenannten Stoffe und Mischungen hiervon. Insbesondere ist es bevorzugt, dass das Bindemittel ausgewählt wird aus der Gruppe bestehend aus Calciumsulfat und Cellulosederivaten.

Gemäß einem Aspekt 47 betrifft die vorliegende Erfindung vorzugsweise einen partikelhaltigen Zylinder gemäß einem der Aspekt 29 bis 46, wobei die Partikel des partikelhaltigen Zylinders zu mindestens 75 Gew.-%, vorzugsweise zu mindestens 87 Gew.-%, mehr bevorzugt zu mindestens 98 Gew.-% Metallpartikel sind, bezogen auf das Gesamtgewicht der Partikel.

Gemäß einem Aspekt 48 betrifft die vorliegende Erfindung vorzugsweise einen partikelhaltigen Zylinder gemäß einem der Aspekt 29 bis 47, wobei das Metall der Metallpartikel zu mindestens 90 Gew.-% ausgewählt wird aus der Gruppe bestehend aus Aluminium, Kupfer, Zinn, Zink, Eisen, Silber, Titan, Nickel, Gold, Platin, Magnesium, Wolfram, Molybdän, Vanadium, Mischungen hiervon und Legierungen hiervon.

Gemäß einem Aspekt 49 betrifft die vorliegende Erfindung vorzugsweise einen partikelhaltigen Zylinder gemäß einem der Aspekt 29 bis 48, wobei das Metall der Metallpartikel zu höchstens 5 Gew.-%, mehr bevorzugt zu höchstens 2 Gew.-%, mehr bevorzugt zu höchstens 1 Gew.-%, ausgewählt wird aus der Gruppe bestehend aus Silber, Palladium, Platin, Gold, Mischungen davon und Legierungen davon.

Gemäß einem Aspekt 50 betrifft die vorliegende Erfindung vorzugsweise einen partikelhaltigen Zylinder gemäß einem der Aspekt 29 bis 49, wobei die Metallpartikel ausgewählt werden aus unbeschichteten Metallpartikeln und beschichteten Metallpartikeln, wobei die Menge der Beschichtung durchschnittlich höchstens 15 Gew.-%, vorzugsweise höchstens 12 Gew.-%, mehr bevorzugt höchstens 10 Gew.-% beträgt, bezogen auf das Gesamtgewicht der beschichteten Metallpigmente.

Gemäß einem Aspekt 51 betrifft die vorliegende Erfindung vorzugsweise die Verwendung eines partikelhaltigen Zylinders zur Erzeugung eines partikelhaltigen Aerosols, wobei der Zylinder ein Volumen von mindestens 5 cm$^3$ aufweist und formstabil ist,
der Anteil an Partikeln im Bereich von 10 Gew.-% bis 99,9 Gew.-% liegt, bezogen auf das Gesamtgewicht des Zylinders, die Biegefestigkeit σ höchstens 3,75 N/mm$^2$, mehr bevorzugt höchstens 2,1 N/mm$^2$, noch mehr bevorzugt höchstens 1,2 N/mm$^2$, noch mehr bevorzugt höchstens 0,675 N/mm$^2$, beträgt, wobei σ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, l = Abstand zwischen den beiden Auflagepunkten,
die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 μm aufweisen und der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon. Vorzugsweise wird das partikelhaltige Aerosol in einem Beschichtungsverfahren eingesetzt, das ausgewählt wird aus der Gruppe bestehend aus Kaltgasspritzen, Flammspritzen, Hochgeschwindigkeitsflammspritzen, thermischem Plasmaspritzen und nichtthermischem Plasmaspritzen, vorzugsweise aus der Gruppe bestehend aus thermischem Plasmaspritzen und nichtthermischem Plasmaspritzen. Insbesondere ist es bevorzugt, dass das Beschichtungsverfahren das nichtthermische Plasmaspritzen ist.

Gemäß einem Aspekt 52 betrifft die vorliegende Erfindung vorzugsweise die Verwendung gemäß Aspekt 51, wobei die anorganischen Bindemittel ausgewählt werden aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon.

Gemäß einem Aspekt 53 betrifft die vorliegende Erfindung vorzugsweise die Verwendung gemäß einem der Aspekte 51 bis 52, wobei die organischen Bindemittel ausgewählt werden aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

Gemäß einem Aspekt 54 betrifft die vorliegende Erfindung vorzugsweise die Verwendung gemäß einem der Aspekte 51 bis 53, wobei ein Zylinder gemäß einem der Aspekte 29 bis 50 verwendet wird.

Gemäß einem Aspekt 55 betrifft die vorliegende Erfindung einen beschichteten Gegenstand, wobei die Beschichtung unter Einsatz eines Aerosols erfolgte, welches mittels eines Verfahrens gemäß einem der Aspekte 1 bis 28 und/oder unter Verwendung mindestens eines Zylinders gemäß einem der Aspekte 29 bis 50 erzeugt wurde.

Abbildungen

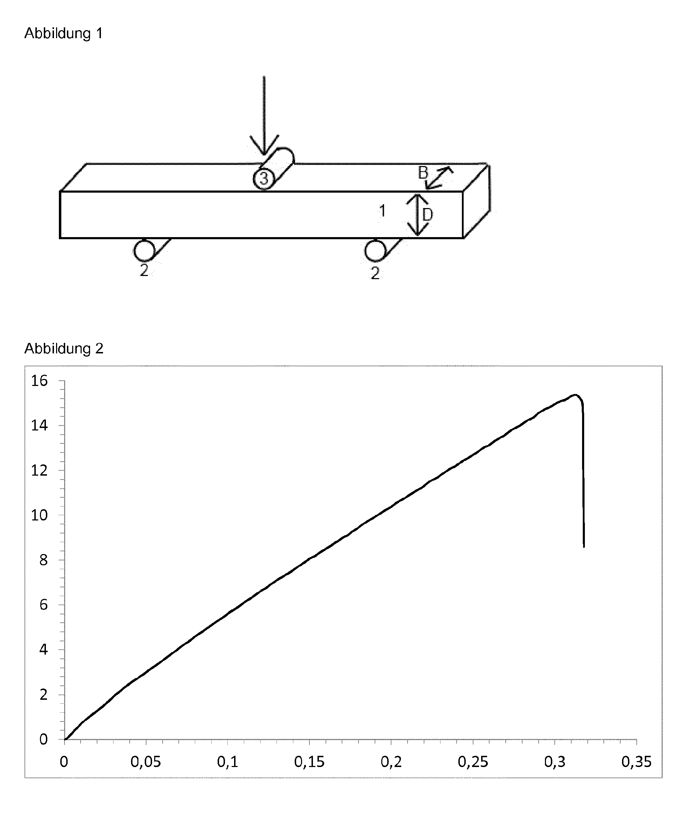

Abbildung 1: schematischer Aufbau der Messung der Biegefestigkeit (1 = partikelhaltiger Zylinder, 2 = Auflagestäbe, 3 = Belastungsstab)

Abbildung 2: Kurve der Dreipunktmessung eines Zylinder gemäß Beispiel 1-13 (Kraft in N (y-Achse) gegen Traversenweg in mm (x-Achse))

Abbildung 3: REM-Aufnahme senkrecht zur Beschichtung eines beschichteten Glasträgers, wobei dieser im Bereich der Beschichtung auseinandergebrochen wurde. Durch die Basisfläche und die Oberfläche der Beschichtung wurden Ausgleichsgeraden gelegt. Die Dicke der Beschichtung beträgt 25 $\mu$m.

Beispiel 1: Herstellung partikelhaltiger Zylinder unter Verwendung von Gips

Gips der Sorte A/Quick Rock Klasse 4 (Firma Quick Dental) oder der Sorte B/Quick Dur S (Firma Quick Dental) und verschiedenste Partikel gemäß Tabelle 1 wurden zunächst miteinander und nachfolgend mit VE-Wasser (demineralisiertes Wasser) und Ethanol vermischt. Das nun leicht fließfähige Material wurde in eine mit Papier ausgekleidete zylindrische Form (kreisrunde Grundfläche, Durchmesser 32 mm) gegeben. Nachdem der Zylinder ausreichend ausgehärtet war, um formstabil zu sein, wurde er aus der Form entnommen. Nachfolgend wurde der erhaltene Zylinder in einem Trockenschrank bei 50 °C getrocknet.

Tabelle 1: partikelhaltige Zylinder mit Bindemittel Gips: VB: Vergleichsbeispiel, Bsp.: Beispiel, (G): nichtplättchenförmige Partikel, (F): plättchenförmige Partikel

| | Partikel | d50 | Pigmentmenge | Gips | VE-Wasser | EtOH | Biegefestigkeit [N/mm$^2$] | Beobachtung |
|---|---|---|---|---|---|---|---|---|
| Bsp 1-1 | Kupfer (G) | 6 μm | 95 g | 6 g A | 20,0 g | 2,0 g | | |
| Bsp 1-2 | Kupfer (G | 30 μm | 95 g | 6 g A | 15,0 g | 1,5 g | | |
| Bsp 1-3 | Aluminium (G) | 2 μm | 95 g | 6 g A | 30,0 g | 0,0 g | | |
| Bsp 1-4 | Kupfer (F) | 3 μm | 50 g | 54 g A | 77,2 g | 8,4 g | | |
| Bsp 1-5 | Kupfer (F) | 42 μm | 70 g | 32 g A | 65,0 g | 7,0 g | | |
| Bsp 1-6 | Messing (F) | 16 μm | 70 g | 32 g A | 95,0 g | 10,0 g | | |
| Bsp 1-7 | Kupfer-Nickel-Zink-Legierung (F) | 12 μm | 70 g | 32 g A | 105,0 g | 11,0 g | | |
| Bsp 1-8 | Kupfer mit Silber beschichtet (F) | 4 μm | 50 g | 54 g A | 77,2 g | 8,4 g | | |
| Bsp 1-9 | Kupfer (G) | 10 μm | 90 g | 12 g A | 26 g | 3,75 g | | |
| Bsp 1-10 | Kupfer (F) | 3 | 30 g | 32 g A | 45 g | 5,0 g | | |
| Bsp 1-11 | Kupfer (F) | 16 μm | 30 g | 77 g A | 95,0 g | 10,0 g | 0,72 | |
| Bsp 1-12 | Kupfer (F) | 16 μm | 70 g | 32 g A | 95,0 g | 10,0 g | 0,0195 | |
| Bsp 1-13 | Kupfer (F) | 16 μm | 50 g | 54 g B | 95,0 g | 10,0 g | 0,21 | |
| Bsp 1-14 | Kupfer (F) | 16 μm | 70 g | 32 g B | 95,0 g | 10,0 g | 0,3 | |
| Bsp 1-15 | Kupfer (G) | 6 μm | 150 g | 164 g A | 73,0 g | 25,0 g | 3,15 | |
| Bsp 1-16 | Kupfer (G) | 6 μm | 150 g | 164 g B | 73,0 g | 25,0 g | 2,4 | |
| Bsp 1-17 | Kupfer (G) | 6 μm | 210 g | 99 g B | 73,0 g | 25,0 g | 1,1 | |
| Bsp 1-18 | Kupfer (G) | 6 μm | 270 g | 32 g A | 73,0 g | 25,0 g | 0,22 | |
| Bsp 1-19 | Kupfer (G) | 6 μm | 270 g | 32 g B | 73,0 g | 25,0 g | 0,14 | |
| VB 1-1 | Kupfer (G) | 10 μm | 95 g | 6 g A | 20,0 g | 2,5 g | | nicht formstabil |
| VB 1-2 | Kupfer (G) | 6 μm | 98 g | 3 g A | 14 g | 1,4 g | | nicht formstabil |
| VB 1-3 | Kupfer (F) | 16 μm | 80 g | 22 g A | 110,0 g | 11,3 g | | nicht formstabil |
| VB 1-4 | Kupfer (F) | 42 μm | 80 g | 22 g A | 73,0 g | 8,0 g | | nicht formstabil |
| VB 1-5 | Messing (F) | 16 μm | 80 g | 22 g A | 110,0 g | 11,3 g | | nicht formstabil |

Tabelle 2: mittlere Dichten von Beispiel 1-17

|  | Teilstück 1 | Teilstück 2 | Teilstück 3 |
|---|---|---|---|
| Scheibe 1 | 4,59 g/cm$^3$ | 4,56 g/cm$^3$ | 4,53 g/cm$^3$ |
| Scheibe 2 | 4,57 g/cm$^3$ | 4,57 g/cm$^3$ | 4,53 g/cm$^3$ |
| Scheibe 3 | 4,50 g/cm$^3$ | 4,57 g/cm$^3$ | 4,52 g/cm$^3$ |

Beispiel 2: Herstellung partikelhaltiger Zylinder unter Verwendung von Ethylcellulose

Ethocel Standard 200 Premium und Partikel wurden zunächst miteinander und nachfolgend mit Aceton vermischt. Das Material wurde in eine mit Papier ausgekleidete zylindrische Form (kreisrunde Grundfläche, Durchmesser 32 mm) gegeben. Nachdem der Zylinder ausreichend ausgehärtet war, um formstabil zu sein, wurde er aus der Form entnommen. Nachfolgend wurde der erhaltene Zylinder in einem Trockenschrank bei 50 °C getrocknet.

Tabelle 3: partikelhaltiger Zylinder mit Bindemittel Ethylcellulose: Bsp.: Beispiel, (G): nichtplättchenförmige Partikel

|  | Partikel | d50 | Pigment | Ethocel | Aceton |
|---|---|---|---|---|---|
| Bsp. 2-1 | Zinn (G) | 15 $\mu$m | 199,9 g | 0,3 g | 14,0 g |

Beispiel 3: Herstellung partikelhaltiger Zylinder unter Verwendung von mikrokristalliner Cellulose

Avicel PH-101 und Partikel wurden zunächst miteinander vermischt und nachfolgend in eine Tablettenpresse des Typs Vaneox (Firma Fluxana) gefüllt. Die Komprimierung erfolgte in Presswerkzeugen mit einem Durchmesser von 40 mm mittels eines Druckes von 3 Tonnen über 10 Sekunden.

Tabelle 4: partikelhaltige Zylinder mit Bindemittel mikrokristalline Cellulose: Bsp.: Beispiel, (G): nichtplättchenförmige Partikel

|  | Partikel | d50 | Pigment | Avicel PH-101 |
|---|---|---|---|---|
| Bsp 3-1 | Zinn (G) | 15 $\mu$m | 24,00 g | 1,0 g |
| Bsp 3.2 | Zinn (G) | 15 $\mu$m | 24,25 g | 0,75 g |
| Bsp 3-3 | Zinn (G) | 15 $\mu$m | 24,5 g | 0,50 g |
| Bsp 3-4 | Zinn (G) | 15 $\mu$m | 24,75 g | 0,25 g |
| Bsp 3-5 | Zinn (G) | 15 $\mu$m | 23,75 g | 1,25 g |
| Bsp 3-6 | Zinn (G) | 15 $\mu$m | 24,88 g | 0,12 g |
| Bsp 3-7 | Zinn (G) | 15 $\mu$m | 24,90 g | 0,10 g |
| Bsp 3-8 | Zinn (G) | 15 $\mu$m | 24,93 g | 0,07 g |
| Bsp 3-9 | Zinn (G) | 15 $\mu$m | 24,25 g | 0,75 g |
| Bsp 3-10 | Zinn (G) | 15 $\mu$m | 1,25 g | 3,75 g |
| Bsp 3-11 | Zinn (G) | 15 $\mu$m | 5,00 g | 5,00 g |
| Bsp 3-12 | Zinn (G) | 15 $\mu$m | 7,50 g | 2,50 g |
| Bsp 3-13 | Zinn (G) | 15 $\mu$m | 13,50 g | 1,50 g |

Anwendungsbeispiel 1: Vereinzelung

Erfindungsgemäße Zylinder wurden mittels einem Aerosolgenerator (Palas RBG 10001) in ein Aerosol überführt. Der erzeugte Aerosolstrom wurde aufgefangen und die darin enthaltenen Feststoffpartikel wurden in einem Partikelgrößenmessgerät HELOS der Fa. Sympatec GmbH, Clausthal-Zellerfeld, Deutschland vermessen. Ferner wurde das in den Zylindern eingearbeitete Partikelmaterial mittels einer Dispergiereinheit vom Typ Rodos T4.1 bei einem Primärdruck von beispielsweise 4 bar dispergiert und vermessen. Die Auswertung der Streulichtsignale erfolgt dabei nach der Fraunhofer Methode.

Tabelle 5: Vereinzelungsversuche

| Versuch | mittlere Partikelgröße aufgefangenes Aerosol | mittlere Partikelgröße enthaltener Partikel |
|---|---|---|
| Beispiel 1-10 | 7 $\mu$m | 3 $\mu$m |
| Beispiel 1-12 | 24 $\mu$m | 16 $\mu$m |
| Beispiel 2-1 | 29 $\mu$m | 15 $\mu$m |

**Patentansprüche**

1. Verfahren zur Herstellung eines partikelhaltigen Aerosols, wobei ein partikelhaltiger Zylinder zerkleinert wird, wobei der Zylinder ein Volumen von mindestens 5 cm$^3$ aufweist und formstabil ist,
der Anteil an Partikeln im Bereich von 10 Gew.-% bis 99,9 Gew.-% liegt, bezogen auf das Gesamtgewicht des Zylinders,
die Biegefestigkeit $\sigma$ höchstens 3,75 N/mm$^2$ beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten,
die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 $\mu$m aufweisen und
der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon.

2. Verfahren gemäß Anspruch 1, wobei das anorganische Bindemittel ausgewählt wird aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon.

3. Verfahren gemäß einem der Ansprüche 1 bis 2, wobei das organische Bindemittel ausgewählt wird aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

4. Verfahren gemäß einem der Ansprüche 1 bis 3, wobei der Zylinder eine Biegefestigkeit von mindestens 0,0075 N/mm$^2$ aufweist.

5. Verfahren gemäß einem der Ansprüche 1 bis 4, wobei der Zylinder mindestens 1,5 Gew.- % anorganische Bindemittel oder mindestens 0,01 Gew.-% organische Bindemittel aufweist.

6. Verfahren gemäß einem der Ansprüche 1 bis 5, wobei der Anteil an nichtplättchenförmigen Partikeln in dem partikelhaltigen Zylinder in einem Bereich von 50 Gew.- % bis 99,9 Gew.-% liegt, jeweils bezogen auf das Gesamtgewicht des Zylinders.

7. Verfahren gemäß einem der Ansprüche 1 bis 5, wobei der Anteil an plättchenförmigen Partikeln in dem partikelhaltigen Zylinder in einem Bereich von 30 Gew.-% bis 75 Gew.-% liegt, jeweils bezogen auf das Gesamtgewicht des Zylinders.

8. Verfahren gemäß einem der Ansprüche 1 bis 7, wobei die Gesamtmenge an Partikeln und Bindemitteln im partikelhaltigen Zylinder mindestens 90 Gew beträgt, bezogen auf das Gesamtgewicht des Zylinders.

9. Verfahren gemäß einem der Ansprüche 1 bis 8, wobei die Menge des Bindemittels in dem partikelhaltigen Zylinder in einem Bereich von 0,05 Gew.-% bis 70 Gew.-% liegt.

10. Verfahren gemäß einem der Ansprüche 1 bis 9, wobei mindestens ein Bindemittel des partikelhaltigen Zylinders ausgewählt wird aus der Gruppe bestehend aus Calciumsulfat und Cellulosederivaten.

11. Verfahren gemäß einem der Ansprüche 1 bis 10, wobei die Partikel des partikelhaltigen Zylinders zu mindestens 75 Gew.-% Metallpartikel sind, bezogen auf das Gesamtgewicht der Partikel.

12. Verfahren zur Beschichtung eines Substrats, wobei es die folgenden Schritte umfasst

a) Herstellung eines partikelhaltigen Aerosols gemäß einem der Ansprüche 1 bis 11,
b) Abscheidung der Partikel auf einem Substrat durch ein Beschichtungsverfahren das ausgewählt wird aus der Gruppe bestehend aus Kaltgasspritzen, Flammspritzen, Hochgeschwindigkeitsflammspritzen, thermischem Plasmaspritzen und nichtthermischem Plasmaspritzen.

13. Partikelhaltiger Zylinder, wobei der Zylinder ein Volumen von mindestens 5 cm$^3$ aufweist und formstabil ist, der Anteil an Partikeln im Bereich von 10 Gew.-% bis 99,9 Gew.-% liegt, bezogen auf das Gesamtgewicht des Zylinders,
die Biegefestigkeit $\sigma$ höchstens 3,75 N/mm$^2$ beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten, die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 $\mu$m aufweisen und
der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon.

14. Partikelhaltiger Zylinder gemäß Anspruch 13, wobei der Zylinder eine Biegefestigkeit von mindestens 0,0075 N/mm$^2$ aufweist, das anorganische Bindemittel ausgewählt wird aus der Gruppe bestehend aus Calciumsulfat, Talk, Calciumhydroxid, Siliciumoxid, Aluminiumoxid, Calciumcarbonat, Calciumsilikathydrate, Calciumaluminathydrate und Mischungen hiervon und das organische Bindemittel ausgewählt wird aus der Gruppe bestehend aus Cellulose, Cellulosederivaten, Polysacchariden, Gelatine, Polyvinylen, Polyacrylaten, Polyethylenoxiden, Polyethylenglykolen, Polyamiden, Epoxidharzen, den Salzen der vorgenannten Stoffe und Mischungen hiervon.

15. Verwendung eines partikelhaltigen Zylinders zur Erzeugung eines partikelhaltigen Aerosols, wobei der Zylinder ein Volumen von mindestens 5 cm$^3$ aufweist und formstabil ist, der Anteil an Partikeln im Bereich von 10 Gew.-% bis 99,9 Gew.-% liegt, bezogen auf das Gesamtgewicht des Zylinders,
die Biegefestigkeit $\sigma$ höchstens 3,75 N/mm$^2$ beträgt, wobei $\sigma$ berechnet wird gemäß Formel (I)

$$\sigma = \frac{3 \times F \times l}{2 \times B \times D^2} \qquad (I)$$

mit F = maximale Kraft, B = Breite des Zylinders in Quaderform, D = Höhe des Zylinders in Quaderform, I = Abstand zwischen den beiden Auflagepunkten,
die Partikel ausgewählt werden aus der Gruppe bestehend aus Metallpartikeln, Glaspartikeln, Micapartikeln, Keramikpartikeln und Mischungen hiervon,
die in dem Zylinder enthaltenen Partikel einen $d_{50}$ von maximal 300 $\mu$m aufweisen und
der Zylinder mindestens 0,01 Gew.-% Bindemittel aufweist, bezogen auf das Gesamtgewicht des partikelhaltigen Zylinders, wobei das Bindemittel ausgewählt wird aus der Gruppe bestehend aus anorganischen Bindemitteln, organischen Bindemitteln und Mischungen hiervon.

Abbildung 1

Abbildung 2

Abbildung 3

Europäisches
Patentamt

European
Patent Office

Office européen
des brevets

## EUROPÄISCHER RECHERCHENBERICHT

Nummer der Anmeldung

EP 14 17 4601

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TORRES P ET AL: "Incorporation of granite cutting sludge in industrial porcelain tile formulations", JOURNAL OF THE EUROPEAN CERAMIC SOCIETY, ELSEVIER SCIENCE PUBLISHERS, BARKING, ESSEX, GB, Bd. 24, Nr. 10-11, 1. September 2004 (2004-09-01), Seiten 3177-3185, XP004504424, ISSN: 0955-2219, DOI: 10.1016/J.JEURCERAMSOC.2003.10.039 | 13,14 | INV. B22F9/04 C23C4/12 C23C24/04 B22F1/00 B22F3/02 B22F3/22 |
| A | * Seite 3178, rechte Spalte * * Tabelle 3 * * Abbildung 1 * ----- | 1-12,15 | |
| A,D | US 6 331 689 B1 (BRANSTON DAVID-WALTER [DE] ET AL) 18. Dezember 2001 (2001-12-18) * das ganze Dokument * ----- | 1-15 | |
| | | | RECHERCHIERTE SACHGEBIETE (IPC) B22F C23C C04B |

Der vorliegende Recherchenbericht wurde für alle Patentansprüche erstellt

| Recherchenort | Abschlußdatum der Recherche | Prüfer |
|---|---|---|
| Den Haag | 16. Januar 2015 | Forestier, Gilles |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 14 17 4601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2015

| Im Recherchenbericht angeführtes Patentdokument | Datum der Veröffentlichung | Mitglied(er) der Patentfamilie | Datum der Veröffentlichung |
|---|---|---|---|
| US 6331689 B1 | 18-12-2001 | KEINE | |

**EP 2 959 992 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4997318 B1
- US 6331689 B1
- US 4660986 A
- WO 2010003396 A1
- EP 1363811 A1
- EP 0911425 B1
- US 7740905 B2
- EP 830464 B1
- US 5207382 A
- WO 2004016821 A
- EP 0344781 A
- EP 0342428 A2
- US 7678428 B2
- US 7928338 B2
- EP 1287898 A2
- EP 0825272 A2
- WO 2010037548 A1
- EP 0492384 A1
- EP 1675971 B1
- EP 2104750 A2
- DE 10320379 A1
- DE 102006061435 A1
- WO 03064061 A1
- WO 2005031026 A1
- DE 19807086 A1
- DE 10116502 A1
- WO 0132949 A1
- EP 0254424 B1
- EP 1024222 A2
- DE 19532412 A1
- DE 19955880 A1
- DE 19856307 C1